# EUROPÄISCHE PATENTSCHRIFT

(11) **EP 1 866 039 B1**
(45) Veröffentlichungstag und Bekanntmachung des Hinweises auf die Patenterteilung: **14.01.2009**
(21) Anmeldenummer: 06776473.8
(22) Anmeldetag: 27.07.2006
(51) Int. Cl.: A63B 43/00, G01P 3/44

(54) **Vorrichtung und Verfahren zum Messen einer Rotationsfrequenz eines beweglichen Spielgeräts**
Apparatus and method for measuring a rotation frequency for a moving game device
Dispositif et procédé destinés à la mesure d'une fréquence de rotation d'un appareil de jeu mobile

(30) Priorität: 29.07.2005 DE 102005036355
(43) Veröffentlichungstag der Anmeldung: 19.12.2007
(73) Patentinhaber: Cairos Technologies AG, 76307 Karlsbad (DE)
(72) Erfinder: KUENZLER, Udo, 76307 Karlsbad (DE); ENGLERT, Walter, 88483 Burgrieden (DE)
(74) Vertreter: Grünecker, Kinkeldey, Stockmair & Schwanhäusser Anwaltssozietät
(86) Internationale Anmeldenummer: PCT/EP2006/007460
(87) Internationale Veröffentlichungsnummer: WO 2007/014701

(56) Entgegenhaltungen:
- WO-A-20/05044396
- DE-U1- 20 004 174
- US-A- 5 150 895
- US-A- 6 151 563

## Beschreibung

Die vorliegende Erfindung bezieht sich auf bewegliche Vorrichtungen und insbesondere Spielgeräte wie beilspielsweise Bälle und auf Konzepte zum Messen einer Rotationsfrequenz eines beweglichen Spielgeräts.

Seit geraumer Zeit besteht bei unterschiedlichen Interessengruppen das Anliegen, bewegte Objekte bzw. Personen in ihrem Bewegungsablauf studieren bzw. diesen nachvollziehen zu können, was die exakte Angabe der Position des Objekts örtlich und zeitlich voraussetzt. Von besonderem Interesse sind hierbei unter anderem Spielbälle insbesondere in kommerzialisierten Sportarten, wie z.B. die im dreidimensionalen Raum hoch beschleunigten Fußbälle ebenso wie Tennis- oder Golfbälle. Die Fragestellung, wer das bespielte Objekt zuletzt berührt hat, wie es getroffen wurde und in welche Richtung es weiterbeschleunigt wurde, kann dabei abhängig von der Spielart für den Ausgang des Spiels entscheidend sein.

Spielgeräte, die im Hochleistungssport eingesetzt werden wie z.B. Tennisbälle, Golfbälle, Fußbälle und dergleichen, lassen sich inzwischen auf extrem hohe Geschwindigkeiten beschleunigen, so dass die Erfassung des Objekts während der Bewegung eine sehr differenzierte Technologie erfordert. Die bislang eingesetzten technischen Mittel - vorwiegend Kameras - genügen den oben dargestellten Erfordernissen nicht oder nur ungenügend; auch die bislang bekannten Verfahren zur Positionsbestimmung mittels unterschiedlicher Sender- und Empfängerkombinationen lassen noch einen großen Spielraum bezüglich der räumlichen Auflösung der Positionsangaben, bezüglich der Handhabbarkeit der benötigten Sender/Empfängerkomponenten und vor allem bezüglich der Auswertung der mittels Sender/Empfängersystem erhaltenen Daten, so dass eine schnellstmögliche Bewertung der aus diesen Daten erhaltenen Ergebnisse noch nicht möglich ist oder zumindest sehr aufwendig ist.

Nicht nur im kommerziellen Sport, in dem bewegliche Spielgeräte eingesetzt werden können, sondern auch im privaten Bereich sind die Benutzer immer mehr an elektronische Geräte gewohnt, die diverse Informationen anzeigen, um einem Benutzer ein Feedback dahin gehend zu gehen, wie er auf einen Gegenstand eingewirkt hat, oder um ihm Informationen darüber zu geben, wie ein Spieler auf ein bewegliches Spielgerät eingewirkt hat.

So arbeiten derzeitige Statistikverfahren in kommerziellen Anwendungen, wie beispielsweise der Fußball-Bundesliga damit, dass relativ einfache Statistiken ausgezeichnet werden, wie beispielsweise der prozentuale Ballkontakt einer Mannschaft oder die Anzahl von Ecken, Freistößen oder Fouls.

Andererseits gibt es insbesondere im Tennis, wo ein sehr planbares übersichtliches Umwelt mit nur zwei Akteuren existiert, Einrichtungen, die z. B. die Geschwindigkeit des Tennisballs beim Aufschlag messen, derart, dass ein Zuschauer in der Lage ist, einzuschätzen, ob ein Aufschlag "hart" oder "weich" war.

Problematisch an solchen Geschwindigkeitsmessungen, die durch optische Verfahren stattfinden können, ist, dass sie in einem Umfeld nicht funktionieren, in dem ein "Gewühle" von Akteuren existiert, wie beispielsweise auf einem Fußballfeld, wo nicht nur zwei Personen agieren, sondern 22 Personen agieren, die zudem noch nicht - wie beim Tennis zum Aufschlag - an nahezu demselben Platz stehen, sondern beliebige Konstellationen auf dem Spielfeld einnehmen können. Andererseits ist es besonders beim Fußball sowohl für das Feedback der Spieler im Training als auch für die Zuschauer interessant, wie eigentlich ein Schuss stattgefunden hat bzw. wie groß eine Schusskraft war.

So stellt das Schießen eines Balls beim Fußball oder beim Tennis die eigentliche gewissermaßen "Basis"-Einwirkung auf das Spielgerät dar, die immer dafür entscheidend ist, wie ein Spiel weitergeht, da es letztendlich immer darum geht, mit dem beweglichen Spielgerät irgendetwas zu tun, es beispielsweise in ein generisches Feld zu spielen (wie im Tennis) oder in ein Tor zu bringen (wie im Fußball) oder in einen Korb zu bringen (wie im Basketball) oder in einem gegnerischen Spielfeld zur Bodenberührung zu bringen (wie im Volleyball). Aufgrund der Schwierigkeiten der sich ständig verändernden Konstellationen bei dynamischen, insbesondere Mannschaftsspielen, jedoch auch beim Tennis, wenn gerade kein Aufschlag gespielt wird, sondern der Ball in einem Spielzug gespielt wird, werden externe Geschwindigkeitsmessungen versagen, was dazu geführt hat, dass derzeit keine flexibel einsetzbaren Schusskrafterfassungssysteme existieren.

Andererseits gilt für den Sportbereich aber auch für den Freizeitbereich eine weitere Einschränkung, die sich daraus ergibt, dass diese Bereiche hochkommerzialisiert sind. So müssen sämtliche Systeme, die Zusatzinformationen liefern, insbesondere, wenn sie für den Freizeitbereich oder für den Freizeit-Sportbereich gedacht sind, zu einem niedrigen Preis anbietbar sein, da es sich hier um Gegenstände handelt, die ein Benutzer nie "unbedingt braucht", aber vielleicht doch gern hätte. Insbesondere in einem solchen Markt ist es entscheidend, dass ein System preiswert und gleichzeitig robust angeboten werden kann. So darf ein System nicht wartungsintensiv sein oder ein großes Maß an Gerätschaften fordern, wie beispielsweise eine Geschwindigkeitsmessungsanlage zur Messung des Aufschlags eines Tennisspielers. Aufgrund der damit verbundenen relativ hohen Kosten würde ein kleiner Tennisverein niemals eine derartige Anlage zu Trainingszwecken anschaffen, was noch vielmehr für einen Privatmann geht, der in seiner Freizeit etwas ambitionierter Tennisspielen möchte.

Wenn betrachtet wird, welche Einwirkungen auf ein Spielgerät stattfinden, wenn z.B. durch einen Schläger oder ein Bein oder einen Arm oder eine Hand eines Spielers geschossen wird, so wird man feststellen, dass meistens das bewegliche Spielgerät in Rotation versetzt wird. Ein Teil der auf das Gerät übertragenen Energie wird somit in Rotationsenergie und nicht z.B. in kinetische oder potentielle Energie umgesetzt. Diese Rotation des beweglichen Spielgeräts hat für eine Flugbahn des beweglichen Spielgeräts eine erhebliche Auswirkung, da damit eine Beeinflussung einer Flugbahn dahin gehend erreicht werden kann, dass die Flugbahn von einer normalen Flugbahn, die ein nicht-rotierender Gegenstand in Luft beispielsweise ausführen würde, abweicht. Aus dem Fußball sind die sogenannten "Bananenflanken" bekannt, die aufgrund der Tatsache stattfinden, dass ein Ball in der Luft rotiert und seine Flugbahn durch die Rotation beeinflusst wird. Bekannt sind auch Freistöße, die sich nach dem Passieren der Mauer ins Tor absenken und für jeden Torwart eine Herausforderung darstellen. Auch hier spielt die Rotation des Spielgeräts eine Rolle.

Eine weitere entscheidende Rolle spielt eine Rotation dann, wenn der rotierende Gegenstand auf dem Boden auftrifft. Jeder kennt diese Erscheinung beispielsweise beim Tischtennis, Tennis oder auch Fußball. Der Ball wird dann, wenn er rotiert, anders abspringen als dann, wenn er nicht rotiert. So wird ein sogenannter "gestoppter" Ball im Tennis dann, wenn er aufspringt, kaum seine Flugrichtung fortsetzen, sondern stark abgebremst werden und eher hoch abspringen und damit zur Verwirrung des Gegenspielers beitragen. Dagegen wird ein beschleunigter Ball dann, wenn er auf den Boden aufschlägt, in einem viel kleineren Winkel zum Boden und stark beschleunigt abspringen, was allein aufgrund der Rotation des Balls stattfindet.

Die Messung einer Rotation eines beweglichen Spielgeräts ist somit ein gutes Maß, um das Verhalten eines beweglichen Spielgeräts vorhersagen zu können, oder um ein Feedback zu bekommen oder um weitere statistische Daten im Hinblick auf ein Fußballspiel beispielsweise zu erheben, dahin gehend, welcher Spieler nicht nur den härtesten Schuss hat, sondern auch die stärkste Rotation einem Ball dann, wenn er schießt, mitgeben kann.

Das US-Patent Nr. 6,151,563 offenbart ein Gerät zum Messen eines beweglichen Objekts wie beispielsweise eines Baseballs, Footballs, Hockey-Pucks, Fußballs, Tennisballs, Bowlingballs oder Golfballs. Eine an dem Ball angebrachte Detektionseinheit umfasst eine Spindetektionsschaltung, eine elektronische Prozessorschaltung, einen Magnetfeldsensor und einen Funksender. Eine Überwachungseinheit wird von einem Benutzer getragen und dient als Benutzerschnittstelle für das Detektionsgerät. Die Überwachungseinheit hat einen Funkempfänger, einen Prozessor, eine Tastatur und eine Ausgabeanzeige, die verschiedene gemessene Bewegungscharakteristika des bewegbaren Objekts anzeigt, wie beispielsweise die Flugzeit, Geschwindigkeit, Trajektorienhöhe, Spin-Rate oder Kurve des beweglichen Objekts. Insbesondere wird eine Spindetektion vorgenommen, indem durch einen magnetoinduktiven Sensor, der ein induktives Element in einem Oszillator ist, eine Erdmagnetfeldmessung durchgeführt wird. Wenn sich der Sensor um 180° bezüglich des Erdmagnetfelds dreht, kann eine bis zu 100%ige Frequenzverschiebung des Oszillators erreicht werden. Damit wird die Frequenz des Oszillators, der durch die variable Induktivität abgestimmt wird, zwischen einem maximalen und einem minimalen Wert variiert, wobei ein Intervall zwischen Frequenzspitzen gemessen wird, um die Spinrate des Objekts zu bestimmen.

Nachteilig an diesem Konzept ist die Tatsache, dass die gesamte Erfassung auf dem Erdmagnetfeld basiert, das von Gegend zu Gegend ganz erheblich variieren kann und damit je nach Stärke des Magnetfelds der Erde zu einer starken oder schwachen Frequenzvariation führen wird.

Darüber hinaus ist die Erdmagnetfeldmessung aufwendig, zumal ein Oszillator vorgesehen werden muss, der zudem mit Energie versorgt werden muss. Diese Problematik ist besonders deswegen groß, da dieser Oszillator innerhalb des Balles angeordnet sein müsste, aber ein Batterieaustausch innerhalb des Balls oder ein Aufladen des Balls problematisch wenn nicht gar unmöglich ist. Ferner ist dieses Konzept des abgestimmten Oszillators auch im Hinblick auf den Energieverbrauch dahin gehend problematisch, dass unabhängig davon, ob eine Rotation detektiert wird, der Oszillator laufen muss und daher genauso viel wertvolle Batterieenergie des Balls verbraucht, wie wenn keine Rotation gemessen wird.

Darüber hinaus ist die Bereitstellung eines Oszillators mit hohem Abstimmbereich aufwendig und insbesondere für niedrigere Frequenzen problematisch, es sei denn, dass auf digitale Schaltungen zurückgegriffen wird, die jedoch wiederum viel mehr Energie benötigen als analoge Schaltungen und zugleich fehleranfälliger sind. Andererseits müssen, um analoge Schaltungen mit Oszillationscharakteristik bei niedrigen Frequenzen aufzubauen, diese Schaltungen entweder hohe Kapazitäten oder hohe Induktivitäten haben, was wiederum zu hohen Kosten des Sensors, zu einem hohen benötigten Volumen und ggf. sogar zu einem hohen Gewicht des Sensors beiträgt. Insbesondere sind jedoch Volumen, Energieverbrauch und speziell auch das Gewicht des Sensors Maße, die so klein als möglich sein sollten, da sich ein Ball ohne Sensor von einem Ball mit Sensor eigentlich nicht im Hinblick auf seine Eigenschaften für den Spieler unterscheiden darf.

Die Aufgabe der vorliegenden Erfindung besteht darin, ein effizientes, preiswertes und dennoch flexibles Konzept zum Messen einer Rotationsfrequenz eines beweglichen Spielgeräts zu schaffen.

Diese Aufgabe wird durch eine Vorrichtung zum Messen einer Rotationsfrequenz eines beweglichen Spielgeräts nach Patentanspruch 1, ein Verfahren zum Messen der Rotationsfrequenz eines beweglichen Spielgeräts nach Patentanspruch 21, ein bewegliches Spielgerät nach Patentanspruch 22 oder ein Computerprogramm nach Patentanspruch 25 gelöst.

Die vorliegende Erfindung basiert auf der Erkenntnis, dass nicht auf das natürliche Magnetfeld zurückgegriffen wird, das für verschiedene Punkte auf der Erde ganz erheblich abweicht und damit die Sensitivitätsprobleme hervorrufen kann, sondern auf ein Funkfeld, welches nicht natürlich existiert, sondern vom Menschen hergestellt ist und überall dort in ausreichender Intensität existiert, wo überhaupt der Bedarf besteht, bewegliche Spielgeräte einzusetzen. Funkfelder, die nahezu überall existieren, sind Langwellen-Felder, Mittelwellen-Felder, Kurzwellen-Felder oder Ultrakurzwellen-Felder. In jeder einigermaßen erschlossenen Region befinden sich jedoch nicht nur solche Rundfunkfelder, sondern auch höher-frequente Felder, die noch energiereicher sind, wie beispielsweise Mobilkommunikationsfelder. So haben hochfrequente Mobilkommunikationsfelder ebenso wie Rundfunk- und Fernseh-Felder die Eigenschaft, dass sie nahezu mit Rundstrahlcharakteristik ausgestrahlt werden und damit überall zur Verfügung stehen, wo die Rotation beweglicher Spielgeräte gemessen werden soll. Je nach beabsichtigtem "Träger"-Feld können unterschiedliche Empfangsantennen in dem beweglichen Spielgerät aufgebaut werde, die jedoch alle die Eigenschaft haben, dass sie nahezu kaum Gewicht haben, einfach implementierbar sind und insbesondere aufgrund des hohen Forschungs/Wissens-Stands von Funkantennen billig und sogar in Ein-Chip-Lösungen zusammen mit einer entsprechenden Front-End-HF-Schaltung auf dem Markt verfügbar sind. Für niedrigere Frequenzen können Ferrit-Antennen eingesetzt werden. Für höhere Frequenzen können einfach Dipol-Antennen eingesetzt werden, die z.B. innerhalb des Balls z.B. innen an der äußeren Schale angebracht sind, oder die im Ball selbst angebracht sind.

Erfindungsgemäß muss einfach die Feldstärkevariation einer solchen Antenne ausgewertet werden, um die Rotationsfrequenz zu erfassen, da nahezu jede Antenne - ob man will oder nicht - eine Richtcharakteristik hat und daher dann, wenn sie in einem existierenden elektromagnetischen Funkfeld gedreht wird, eine je nach Ausrichtung der Richtcharakteristik der Antenne mit dem elektromagnetischen Feld eine größere oder kleinere Feldstärke ausgeben wird.

Diese Feldstärke stellt eine einfach zu messende und einfach weiter zu verarbeitende Größe wie beispielsweise Spannung oder Strom am Ausgang der Antenne dar, deren Hüllkurve zu detektieren ist, um die Frequenz der Hüllkurve zu erhalten, die gleich der Rotationsfrequenz des Spielgeräts ist. Durch das erfindungsgemäße Zurückgreifen auf das überall, wo bewegliche Spielgeräte im Hinblick auf die Rotationsfrequenz zu messen sind, existierende Funkfeld werden sämtliche Magnetfeld-bezogenen Probleme bei Volumen, Gewicht, Empfindlichkeitsschwankungen etc. gelöst.

Antennen zum Erfassen beliebiger Wellenlängenbereiche für Funkantennen existieren in beliebigen Größen und können so beliebig an die Größe des beweglichen Spielgeräts angepasst werden, da typischerweise in jedem Wellenlängenbereich und insbesondere auch im Hochfrequenzwellenbereich bei oder über ein GHz ausreichend Funkenergie vorhanden ist, auf deren Basis die Messung der Rotation vorgenommen werden kann.

Selbst wenn kein Umgebungsfeld vorhanden ist, kann das erfindungsgemäße Erfassungsgerät dennoch sicher arbeiten, wenn durch das Spielgerät, das typischerweise immer über eine Funkschnittstelle mit einem externen Sender kommunizieren wird, dem externen Sender der Befehl gegeben wird, ein Funkfeld zu erzeugen, dessen Modulation dann einfach durch die selbe Antenne des beweglichen Spielgeräts gemessen wird, mit der das bewegliche Spielgerät ohnehin mit dem externen Gerät kommuniziert. Damit kann ein in sich geschlossenes System alternativ zum offenen Funksystem ohne Weiteres implementiert werden, wobei keine energieintensiven Schritte innerhalb des beweglichen Spielgeräts vonnöten sind. Im geschlossenen System muss lediglich das externe Kommunikationsgerät Energie senden. Wenn dies durch eine Uhr oder etwas Ähnliches getan wird, so muss in dieser Uhr die Batterie öfters ausgewechselt werden. Alternativ kann jedoch auch eine Energieversorgungsleitung, die fest z.B. an einem Sportplatz installiert ist, genommen werden, so dass keinerlei Batteriebetrieb nötig ist. Selbst wenn jedoch ein Batteriebetrieb nötig ist, sind ein Batterieaustausch und insbesondere die Verwendung von Akkus wesentlich einfacher und billiger als wenn innerhalb des Balls ein Batterieaustausch nötig werden würde, der entweder nicht möglich ist oder nur mit hohem Aufwand an Kosten und Ausfallzeit des Spielgeräts bewerkstelligt werden kann, ohne die Charakteristika des Spielgeräts zu stark zu beeinflussen.

Bevorzugterweise hat das mobile Spielgerät ferner eine Schusskraftmessungseinrichtung, die darauf basiert, dass eine genaue, wartungsarme und gleichzeitig flexibel einsetzbare Schusskraftmessung dadurch erreicht werden kann, wenn ein zeitlicher Verlauf einer Beschleunigung oder ein zeitlicher Verlauf eines Innendrucks eines beweglichen Spielgeräts geliefert wird, um dann diesen zeitlichen Verlauf zu verarbeiten, und zwar mit dem Ziel, ein Energiemaß zu erhalten, das von einer durch den Schuss auf den Gegenstand übertragenen Energie abhängt. Ferner wird eine Einrichtung zum Liefern einer Information über die Schusskraft vorgesehen, welche zur Schusskraftbestimmung das Synergiemaß verwendet. So wird somit keine direkte Geschwindigkeitsmessung vorgenommen, sondern bei bevorzugten Ausführungsbeispielen höchstens eine indirekte Geschwindigkeitsmessung, dahingehend, dass ein zeitlicher Beschleunigungsverlauf und ein zeitlicher Druckverlauf erfasst wird und dieser zeitliche Verlauf verarbeitet wird, um ein Energiemaß zu erhalten, also irgendeine Größe, die in irgendeiner Weise linear oder nicht-linear oder auf irgendeine andere Art und Weise mit der Energie zusammenhängt. Dieses Maß wird dann verwendet, um eine Schusskraftinformation zu liefern. Diese Schusskraftinformation kann ein quantitativer, aber einheitenfreier Wert z. B. auf einer Skala zwischen 1 und 10 sein oder aber kann ein Wert auf einer nach oben offenen Skala sein oder kann ein Wert für eine auf das bewegliche Spielgerät zum Zeitpunkt des Schusses ausgeübte Kraft sein oder kann ein Energiewert sein, also ein Wert für die Energie, die beim Schuss in das bewegliche Spielgerät hineingebracht worden ist.

Alternativ kann die Schusskraft auch eine Längenanzeige sein, die ein Maß dafür liefert, wie weit der Ball beispielsweise geflogen wäre, wenn der Ball im optimalen Winkel und ohne Rotation abgeschossen worden wäre. Ein solches Schusskraftergebnis ist insbesondere für Ballsportarten interessant, wie Fußball oder American Football, da dort die Spieler intuitiv mehr mit einem Längenmaß, wie weit z. B. ein Pass oder Abschlag gegangen wäre, anfangen können, als mit quantitativen Werten oder physikalischen Kraft- oder Energieeinheiten. Für den Vergleich mit anderen Spielern ist jedoch auch die einheitenlose quantitative Skala egal ob geschlossen oder nach oben offen von hohem Interesse.

Bei bevorzugten Ausführungsbeispielen wird ferner eine Ballkontakterfassung vorgenommen. Hierbei können verschiedene Komponenten für beide Aufgaben eingesetzt werden. Hierzu ist die Verwendung von zwei Signalen, die unterschiedliche Signalgeschwindigkeiten haben, optimal, um eine robuste und dennoch effiziente und genaue Erfassung eines Kontakts mit einer beweglichen Vorrichtung zu erreichen. So wird von einem Detektor in der beweglichen Vorrichtung, also z.B. in einem Fußball, erfasst, ob sich in der Nähe des Fußballs ein Objekt befindet, wie beispielsweise das Bein eines Fußballspielers. Dies geschieht z. B. durch eine Druck-, Beschleunigungs- oder Erschütterungsmessung oder auch durch eine berührungslose Messung.

Sobald erfasst worden ist, dass sich in der Nähe der beweglichen Vorrichtung das Objekt befindet, wird das Sendermodul angesteuert, um zwei Signale auszusenden, die unterschiedliche Signalgeschwindigkeiten haben. Eine mit dem Objekt verbundene Empfängervorrichtung erfasst das erste Signal und wartet dann eine bestimmte Zeit lang auf den Empfang des zweiten Signals mit langsamerer Signalgeschwindigkeit. Wird das Signal mit langsamerer Signalgeschwindigkeit innerhalb des vorbestimmten Zeitraums, der mit dem Empfang des ersten schnellen Signals beginnt, erfasst, so wird davon ausgegangen, dass das Objekt, das sowohl das erste als auch innerhalb des vorbestimmten Zeitraums das zweite Signal empfangen hat, einen Kontakt mit der beweglichen Vorrichtung hatte. Dies wird dadurch wiedergegeben, dass ein Detektor, der den Empfang des zweiten Signals im vorbestimmten Zeitraum detektiert hat, ein Detektorausgangssignal liefert, wobei dann von einem Speicher gespeichert wird, dass es ein Detektorausgangssignal gegeben hat, dass es also (sehr wahrscheinlich) einen Ballkontakt gegeben hat. Alternativ oder zusätzlich kann ein absoluter Zeitpunkt, zu dem es das Detektorsignal gegeben hat, im Speicher gespeichert werden, so dass sich, wenn man an ein Fußballspiel denkt, eine Folge von Zeitpunkten ergibt, die dann z.B. nach einem Spiel oder während eines Spiels ausgelesen werden können, um davon abhängig festzustellen, wie viel Ballkontakte ein Spieler hatte bzw. allgemein gesagt, wie viel Kontakte ein Objekt mit der beweglichen Vorrichtung hatte.

Wenn davon ausgegangen wird, dass sich z.B. mehrere Fußballspieler in der Nähe des Balls befinden, so wird das schnelle Signal von mehreren Empfängervorrichtungen detektiert werden. Ist die vorbestimmte Zeitdauer jedoch so gewählt, dass mit hoher Wahrscheinlichkeit nur wirklich die Empfängervorrichtung, die am nächsten zur beweglichen Vorrichtung angeordnet ist, innerhalb des vorbestimmten Zeitraums das zweite Signal empfangen kann, während weiter entfernt befindliche Empfängervorrichtungen zwar ebenfalls das zweite Signal empfangen, allerdings nach Verstreichen der vorbestimmten Zeitdauer, so wird für diese Spieler kein Ballkontakt registriert.

Durch Einstellen der vorbestimmten Zeitdauer in den Empfängervorrichtungen, die vom Spieler getragen werden, kann somit die Genauigkeit bzw. die Reichweite eingestellt werden, die erfasst werden soll. Kein Zugriff auf den Ball selbst ist hierzu erforderlich.

Ferner ermöglicht die Verwendung von zwei Signalen unterschiedlicher Geschwindigkeit, dass im Ball selbst keine komplizierte und damit fehleranfällige Elektronik benötigt wird. Es muss lediglich dafür gesorgt werden, dass der Ball einen Nähedetektor hat, der berührungs-gesteuert oder berührungslos arbeitet, der dann die Aussendung der beiden Signale unterschiedlicher Laufzeiten steuert. Im Ball selbst ist daher keine komplizierte Elektronik nötig, was insbesondere deswegen von erheblichem Vorteil ist, da die auf den Ball drückenden Kräfte und Beschleunigungen immens sein können, so dass für Elektronik im Ball ein sehr raues Umfeld existiert.

Auf Empfängerseite werden keine persönlichen Identifikationen oder etwas Ähnliches benötigt, was, insbesondere wenn daran gedacht wird, dass es sich um ein Massenprodukt handelt, dass also viele Spieler mit Empfängervorrichtungen versehen werden sollen, von erheblichem Vorteil ist, da somit alle Empfängervorrichtungen identisch arbeiten können und keinerlei spezielle Identifikation benötigen, was auch die Empfängervorrichtungen einfach und wartungsarm bzw. sogar ganz wartungsfrei macht. Außerdem wird durch einen einfachen und robusten Aufbau auch die Manipulationssicherheit gewährleistet.

Bevorzugte Ausführungsbeispiele der vorliegenden Erfindung werden nachfolgend Bezug nehmend auf die beiliegenden Zeichnungen detailliert erläutert. Es zeigen:

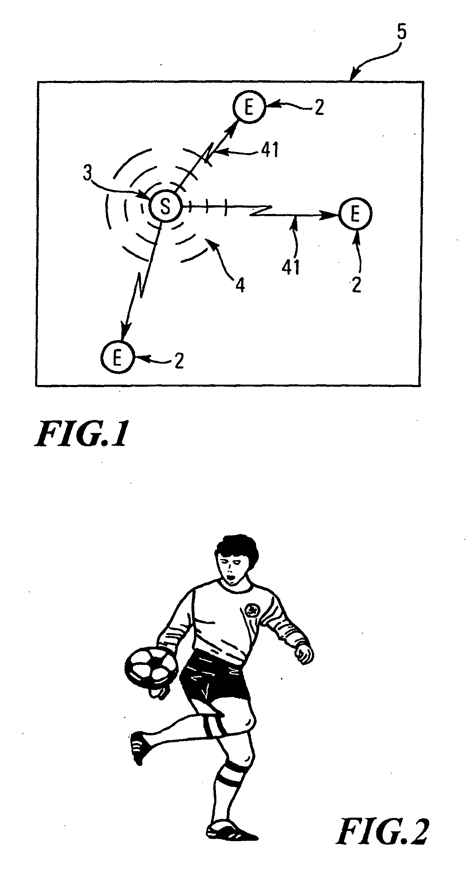

- Fig. 1: eine schematische Skizze eines Spielfelds mit einer beweglichen Vorrichtung und mehreren mit Empfängern versehenen Objekten; .
- Fig. 2: einen Spieler mit einem Fußball als Beispiel für eine bewegliche Vorrichtung;
- Fig. 3: eine schematische Systemskizze;
- Fig. 4a: eine detailliertere Ansicht der Funktionsgruppen in der beweglichen Vorrichtung;
- Fig. 4b: eine detailliertere Darstellung des Sendermoduls von Fig. 4a;
- Fig. 5a: eine Blockschaltbilddarstellung der Empfängervorrichtung; und
- Fig. 5b: eine detailliertere Darstellung der Empfängervorrichtung von Fig. 5a;
- Fig. 6a: einen qualitativen schematischen Verlauf der Beschleunigung über der Zeit während eines Schusses;
- Fig. 6b: einen qualitativen Verlauf der Geschwindigkeit über der Zeit während eines Schusses;
- Fig. 6c: einen qualitativen Verlauf der Kraft, die auf das bewegliche Spielgerät ausgeübt wird, während eines Schusses,
- Fig. 6d: einen qualitativen Verlauf der Kraft als Funktion der Wegstrecke, die während eines Schusses auf ein bewegliches Spielgerät ausgeübt wird;
- Fig. 6e: eine bevorzugte Zuweisungstabelle zwischen dem Energiemaß und der Schusskraft;
- Fig. 7: einen qualitativen Verlauf des Innendrucks eines beweglichen Spielgeräts;
- Fig. 8: eine Geradenschar zur Bestimmung der Schusskraft mit dem Ruhe-Innendruck als Parameter;
- Fig. 9: ein schematisches Blockschaltbild der Vorrichtung zum Messen einer auf ein bewegliches Spielgerät ausgeübten Schusskraft;
- Fig. 10: ein Ablaufdiagramm für eine bevorzugte Schusskraftmessung mittels eines zeitlichen Druckverlaufs;
- Fig. 11: ein schematisches Blockschaltbild des erfindungsgemäßen Konzepts zum Messen einer Rotationsfrequenz eines beweglichen Spielgeräts;
- Fig. 12a: ein Spektrum eines Funkantennen-Empfangssignals vor der Selektion;
- Fig. 12b: ein Spektrum des Funkantennen-Empfangssignals nach der Selektion;
- Fig. 13: eine schematische Darstellung der Ausrichtung von zwei Empfangsantennen mit Richtcharakteristika, die unterschiedliche Richtungen maximaler Empfindlichkeit haben;
- Fig. 14: ein Szenario auf einem Fußballplatz mit verschiedenen Sendern, wie beispielsweise Rundfunksendern, Mobiltelefonen oder sonstigen Funksendern;
- Fig. 15: ein Flussdiagramm der Kommunikation in einem geschlossenen System; und
- Fig. 16: ein Blockschaltbild einer bevorzugten Implementierung der Baugruppe innerhalb des mobilen Spielgeräts.

Um die Geschicklichkeit beim Ballspiel zu verbessern oder sich mit anderen Spielern vergleichen zu können, müssen objektive Daten auf einfache Art und Weise gewonnen werden. Diese müssten so visualisiert werden, dass ein Trainings Feedback oder ein Vergleich mit anderen Spielern möglich ist. Dazu sind entsprechende Komponenten im Spielgerät und ein Datenerfassungsgerät bedarfsweise mit Anzeigeeinheit vorgesehen.

Bei einem preiswerten System kann die Erkennung der Person nicht über Laufzeiten der Funksignale erfolgen. Hierzu müssten die eintreffenden Funksignale mit einer hoch genauen Zeitreferenz verglichen werden. Außerdem müsste ein Netzwerk aufgebaut werden, in dem alle gemessenen Zeiten verglichen werden, um den am dichtesten zum Ball stehenden Spieler zu ermitteln. Daher wird nun aus der Aussendung eines Funksignals und eines akustischen Signals darauf geschlossen, wer den letzten Ballkontakt hatte.

Durch Messung der auf das Spielgerät einwirkenden Kräfte kann auch auf die Schusskraft oder die Rotationsgeschwindigkeit des Spielgeräts geschlossen werden. Erfolgt dabei eine Energiebetrachtung kann der einzelne Spieler, seine Einwirkung auf das Spielgerät kontrollieren lernen.

Weitere Vorteile ergeben sich aus den weiteren Ansprüchen und Unteransprüchen und der folgenden Beschreibung.

Bevor die Erfindung im Detail beschrieben wird ist darauf hinzuweisen, dass sie nicht auf die jeweiligen Bauteile der Vorrichtung oder die erläuterte Vorgehensweise beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn in der Beschreibung.und in den Ansprüchen die Einzahl oder unbestimmte Artikel verwendet werden, beziehen sich diese auch auf die Mehrzahl dieser Elemente, solange nicht der Gesamtzusammenhang eindeutig etwas anderes deutlich macht. Dasselbe gilt in umgekehrter Richtung.

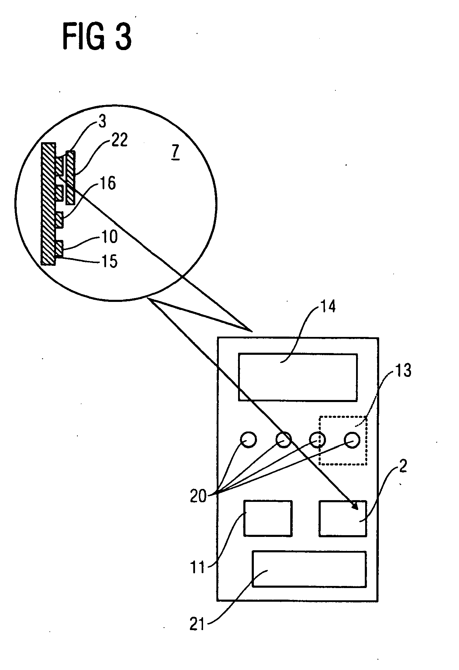

Figur 3 zeigt eine schematische Systemskizze. Insbesondere zeigt sie eine Vorrichtung zur Erfassung der Kraft- und/oder Bewegungsverhältnisse an einem Spielgerät 7, wie einem Ball, wobei in dem Ball eine Baugruppe 15 vorgesehen ist, die mit mehreren elektronischen Komponenten bestückt ist. Anstelle der Baugruppe können die elektronischen Komponenten auch auf der Umhüllung des Balls zum Beispiel innenseitig oder durch eine Aufhängung in der Mitte des Balls angeordnet sein.

In dem Spielgerät ist wenigstens eine der folgenden elektronischen Komponenten vorgesehen:
- ein Sender 4 für Schall- oder Ultraschallwellen zur Aussendung eines akustischen Signals,
- ein Drucksensor 10,
- ein Beschleunigungssensor,
- wenigstens ein Hall-Sensor 16,
- wenigstens zwei magnetoresistive Sensoren,
- wenigstens zwei Spulen.

Über den Sender 4 für die Schall- oder Ultraschallwellen oder über wenigstens einen Funksender 3 stehen die elektronischen Komponenten zum Beispiel über Funk 1 mit einem Empfänger 2 in Verbindung, um zum Beispiel die von den elektronischen Komponenten erfassten Daten zu übermitteln. Ferner ist ein Mikrocontroller 11 zur Aufbereitung der Daten vorgesehen. Diese Daten können dann an ein Datenerfassungsgerät 12 übermittelt werden. Eine Auswerteeinheit 13 ist zur Auswertung der erfassten Daten vorgesehen, die bedarfsweise auf einer Anzeigeeinheit 14 dargestellt werden. Das Datenerfassungsgerät 12 ist vorzugsweise wenigstens einem Spieler 6, vorzugsweise jedoch allen Spielern eines Spiels zugeordnet, um dadurch zum Beispiel eine Ortung des nächstliegenden Spielers vorzunehmen, wie weiter unten noch erläutert wird.

Bei manchen Spielern, wie zum Beispiel bei einem Fußballspiel ist es häufig interessant zu wissen, wer die meisten Ballkontakte hatte. Um dies zu bestimmen, muss während des Ballkontakts festgestellt werden, wer den Ball berührt hat.

Bei einem preiswerten System kann die Erkennung der Person nicht über Laufzeiten der Funksignale erfolgen. Hierzu müssten die eintreffenden Funksignale mit einer hochgenauen Zeitreferenz verglichen werden und es müsste ein Netzwerk aufgebaut werden, in dem alle gemessenen Zeiten verglichen werden, um den am dichtesten zum Ball stehenden Spieler zu ermitteln. Alternativ könnte die Feldstärke des Senders am Ball verwendet werden, um eine Abstand abzuschätzen. Dies ist allerdings ungenau.

Um die Kosten niedrig zu halten, wird in der Vorrichtung die Laufzeit des Schalls gemessen. Hierzu gibt das Spielgerät 7 beim Erkennen einer Krafteinwirkung ein akustisches Signal als Schall- oder Ultraschall durch einen Sender 4 ab. Zeitgleich sendet ein Funksender 3 ein Funksignal. Der Empfänger 2 eines Datenerfassungsgerätes, das dem Spieler 6 zugeordnet ist, registriert das akustische Signal und auch das Funksignal. Die Zeitdifferenz ergibt den Abstand zum Ball. Sobald das Funksignal erkannt wird, wird 5 ms auf das Eintreffen des akustischen Signals gewartet. Wird in dieser Zeit ein Schallimpuls erkannt, kann man davon ausgehen, dass der Empfänger 2 des dem Spieler 6 zugeordneten Datenerfassungsgerät 12 maximal 1,5 Meter vom Ball entfernt ist. Dieser Spieler hat dann mit großer Wahrscheinlichkeit den Ball berührt. Vorzugsweise trägt jeder Spieler 6 solch einen Empfänger. Die Anzahl der erkannten Schallimpulse wird gezählt und angezeigt. Mit Hilfe dieser Information und der Uhrzeit des Ereignisses kann bei einem späteren Zusammenspiel aller Daten aller Datenerfassungseinheiten 12 festgestellt werden, wie viele Ballkontakte ein Spieler 6 hatte. Es ist sogar möglich, statistische Aussagen darüber zu treffen, wie erfolgreich Ballabgaben waren, da das Ziel einer Ballabgabe durch einen Zeitvergleich ermittelbar ist. Damit kann zum Beispiel erfasst werden:
- Wer hat den Ball wie oft an den Gegner verloren?
- Waren die Ballkontakte über die Spielzeit konstant und gab es einen Leistungseinbruch?
- Wer hat wen wie oft angespielt?
- Wie oft ging ein Spielzug über mehrere Spieler der gleichen Mannschaft?

Die Auswerteeinheit 13 hat damit Mittel zur Beurteilung, ob innerhalb einer vorbestimmten Zeit nach Eingang des Funksignals ein akustisches Signal des Senders 4 für Ball oder Ultraschallwellen eingeht.

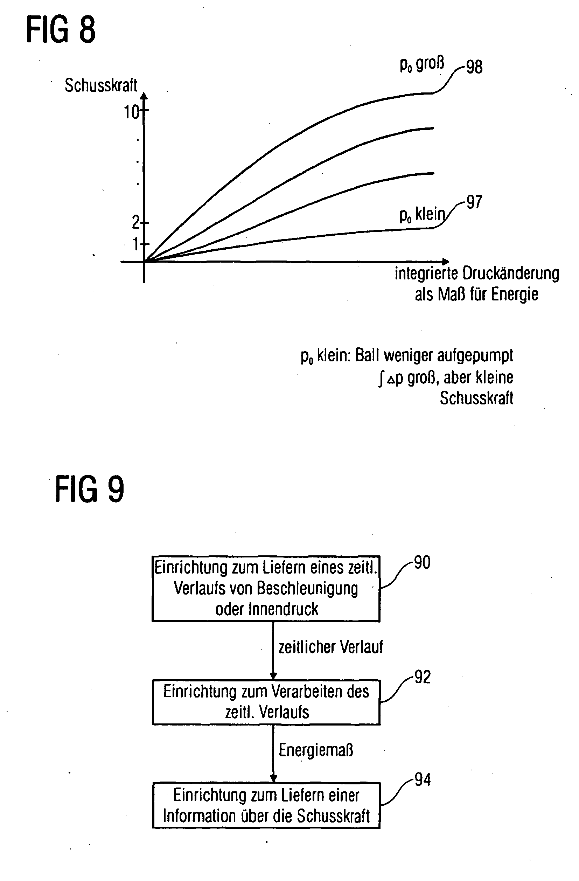

Eine Vorrichtung zum Messen einer auf ein bewegliches Spielgerät ausgeübten Schusskraft ist in Fig. 9 gezeigt. Die Vorrichtung umfasst eine Einrichtung 90 zum Liefern eines bei einer durch einen Schuss verursachten Einwirkung auf das Spielgerät auftretenden zeitlichen Verlaufs einer Beschleunigung oder eines (Innen-) Drucks eines beweglichen Spielgeräts.

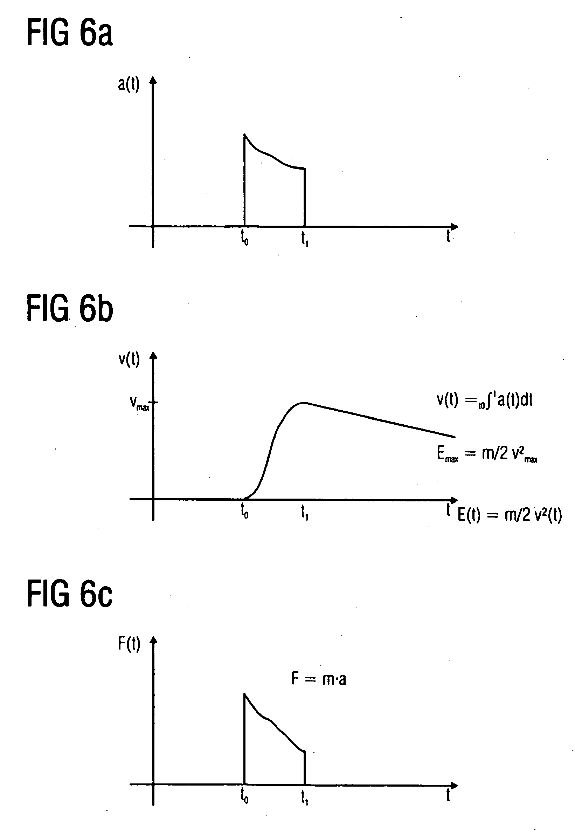

Je nach Sportart ist der Gegenstand, der auf das bewegliche Spielgerät einwirkt, ein Tennisschläger, ein Bein eines Fußballspielers, eine Hand eines Handballspielers, ein Tischtennisschläger etc., wenn das bewegliche Spielgerät ein Ball ist. Aufgrund der Tatsache, dass ein Gegenstand im Rahmen eines Schusses auf das bewegliche Spielgerät einwirkt, wird eine Beschleunigung auf das bewegliche Spielgerät ausgeübt, die dann, wenn davon ausgegangen wird, dass das bewegliche Spielgerät vorher im Ruhezustand war, gleich Null war, und zu einem Zeitpunkt t₀, zu dem der Gegenstand auf das Spielgerät auftrifft, ruckartig ansteigen wird, um dann, wie es in Fig. 6a gezeigt ist, abzufallen, und zwar bis zum Zeitpunkt t₁, zu dem das bewegliche Spielgerät den Gegenstand, der auf das bewegliche Spielgerät eingewirkt hat, verlässt.

Dieser Abfall zum Zeitpunkt t₁ kann wieder mehr oder weniger abrupt sein, oder es kann auch der Fall auftreten, bei dem sich der Beschleunigungsverlauf a(t) relativ "weich" dem Nullwert annähert, bei dem dann eine konstante Geschwindigkeit erreicht ist, welche dann, aufgrund der Abbremsung durch Luftreibung irgendwann negativ wird. Die Abbremsung des beweglichen Spielgeräts durch Reibung oder Auffanggegenstände sind für die Schusskraftmessung zunächst unerheblich, oder abhängig von der Definition der Schusskraft zu berücksichtigen. Der letztere Fall tritt ein, wenn beispielsweise als Schusskraft eine Länge in Metern angegeben wird, die ein Fußball fliegen würde. Dann wäre die Abbremsung des Spielgeräts durch Luftreibung zu berücksichtigen, und zwar bei der Berechnung der Information über die Schusskraft basierend auf dem Energiemaß.

Im Einzelnen umfasst die in Fig. 9 gezeigte Vorrichtung eine Einrichtung 92 zum Verarbeiten des zeitlichen Verlaufs der Beschleunigung oder des zeitlichen Verlaufs des Innendrucks, um ein Energiemaß zu erhalten, das von einer durch den Schuss auf den Gegenstand übertragenen Energie abhängt. Dieses Energiemaß kann z.B. die Geschwindigkeit zum Zeitpunkt t₁ sein, die durch den Schuss auf das bewegliche Spielgerät ausgeübt worden ist. Eine solche Situation ist in Fig. 6b gezeigt. Wenn wieder davon ausgegangen wird, dass sich der Gegenstand zum Zeitpunkt t₀ im Ruhezustand befunden hat, so wird seine Geschwindigkeit aufgrund der zum Zeitpunkt t₀ ausgeübten Beschleunigung ansteigen und bis zum Zeitpunkt t₁ zunehmen. Zum Zeitpunkt t₁ verlässt der Fußball beispielsweise das Bein des Fußballspielers, und es ist eine Maximalgeschwindigkeit vₘₐₓ erreicht, die dann aufgrund der Luftreibung wieder abnehmen wird. Die Momentangeschwindigkeit zum Zeitpunkt t zwischen t₀ und t₁ kann ohne Weiteres durch die in Fig. 6b rechts gezeigte Gleichung aktuell berechnet werden.

Ein bevorzugtes Energiemaß ist jedoch die Maximalgeschwindigkeit zum Zeitpunkt t₁, da diese Energie - von einer potentielle Energie abgesehen, die typischerweise vernachlässigbar sein wird - die Energie ist, die der Spieler auf das Spielgerät übertragen hat. Hat der Spieler viel Energie übertragen, so ist seine Schusskraft hoch. Hat der Spieler dagegen wenig Energie übertragen, so war seine Schusskraft niedrig, vorausgesetzt, dass für beide Fälle sonstige Umstände des Spielgeräts, beispielsweise der Innendruck vergleichbar sind, wie es noch bezugnehmend auf Fig. 8 detailliert erläutert wird.

Die Einrichtung 92 kann also z.B. die Maximalgeschwindigkeit als Energiemaß berechnen oder sogar, unter Verwendung der Ballmasse, die Energie berechnen, die der Maximalgeschwindigkeit zugeordnet ist und als Eₘₐₓ bezeichnet wird.

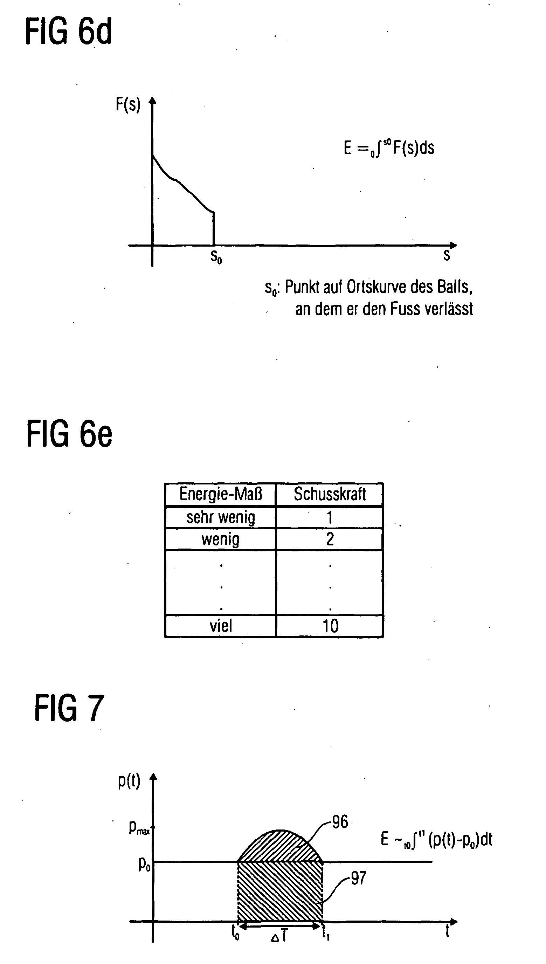

Die in Fig. 9 gezeigte Vorrichtung umfasst ferner eine Einrichtung 94 zum Liefern einer Information über die Schusskraft basierend auf dem Energiemaß. Die Funktionalität der Einrichtung 94 wird anhand von Fig. 6e erläutert und kann in diesem Fall einfach eine Zuweisungstabelle sein, die das berechnete Energiemaß in eine Skala z. B. zwischen 1 und 10, wie im Fall von Fig. 6e oder in eine nach oben offene Skala oder auch in eine Trendanzeige abbildet.

Eine Trendanzeige würde darin bestehen, dass ein Vergleich des aktuellen Energiemaßes mit einem vorher bestimmten Energiemaß, das einem anderen Spieler zugeordnet war, vorgenommen wird, um dann als Trendanzeige also als Informationen über die Schusskraft sagen zu können, dass die Schusskraft des aktuellen Spielers größer, gleich oder kleiner als die Schusskraft des vorherigen Spielers war.

Eine solche Abbildung des Energiemaßes auf eine Schusskraftinformation kann mit beliebigen Energie-Maßen vorgenommen werden, also auch z. B. dann, wenn die Kraft, wie sie in Fig. 6c als Verlauf über der Zeit gezeigt ist, ausgewertet wird. So ist der Kraftverlauf zum Beschleunigungsverlauf proportional, und zwar mit der Masse des beweglichen Spielgeräts als Proportionalitätskonstante. Auch der Verlauf der Kraft über der Zeit gibt ein Energiemaß, das z. B. durch Integration der Kraft über der Zeit berechnet werden könnte.

Alternativ kann auch, wie es in Fig. 6d gezeigt ist, die auf den Ball ausgeübte gerichtete Kraft als Funktion der Ortskurve, auf der sich der Ball während des Schusses bewegt, gemessen werden. So wird die Kraft zum Ortspunkt x = 0, an dem der Ball liegt, bevor er durch das Bein des Spielers getroffen wird, auf einen hohen Wert ansteigen, der bis zu einem bestimmten Wert fällt. Der Ball verlässt am Ortspunkt s₀ auf der Ortskurve den Fuß des Spielers, so dass auf den Ball keine Antriebskraft mehr ausgeübt wird, sondern nur noch auf der Luftreibung vorhandene Abbremskräfte, die jedoch in Fig. 6d nicht berücksichtigt sind.

Ein Energiemaß stellt somit auch die Integration der gemessenen Kraft (Beschleunigung) über der Ortskurve, die der Ball zurücklegt, dar. Die Ortskurve kann beispielsweise gleichzeitig mit dem Beschleunigungssensor in dem Ball gemessen werden, wenn der Beschleunigungssensor ein dreidimensional arbeitender Beschleunigungssensor ist, der zudem richtungssensitiv ist. Alternativ kann die Ortskurve eines Flugkörpers auch durch andere Arten und Weisen berechnet werden, wie beispielsweise durch hochgenaue satelliten- oder bodengestützte Ortungssysteme oder auch durch Zugreifen auf vorbestimmte Tabellen. Jedoch auch mikromechanische Ortungssysteme unter Verwendung von Vibrationsgyroskopen können zur Bestimmung der Ortskurve eingesetzt werden, um das in Fig. 6 gezeigte Integral numerisch auswerten zu können.

Das bevorzugte Ausführungsbeispiel der vorliegenden Erfindung besteht jedoch darin, in dem beweglichen Spielgerät einen Drucksensor vorzusehen. Wenn das bewegliche Spielgerät geschossen wird, könnte es einen Druckverlauf haben, wie er in Fig. 7 qualitativ gezeigt ist. Zu einem Zeitpunkt t₀ trifft der Gegenstand auf das bewegliche Spielgerät, was zu einem Druckanstieg in dem beweglichen Spielgerät führen wird, da das bewegliche Spielgerät durch den auf das bewegliche Spielgerät aufschlagenden Gegenstand verformt wird. Dieser Druckanstieg wird bis zum einem Maximaldruck pₘₐₓ ansteigen und dann wieder abnehmen, um in der Gegend von Zeitpunkt t₁, der dadurch gekennzeichnet ist, dass das bewegliche Spielgerät keinen Kontakt mehr zu dem Gegenstand hat, wieder auf den Ruhedruck abzusinken.

So wurde herausgefunden, dass das Integral über die Druckänderung, also der Flächeninhalt der in Fig. 7 schraffiert gezeichneten Fläche, mit der auf den Ball ausgeübten Energie zusammenhängt, so dass der zeitliche Verlauf des Drucks vorteilhafterweise zur Schusskraftbestimmung eingesetzt werden kann.

Die Verwendung eines Drucksensors ist im Vergleich zu einem Beschleunigungssensor besonders vorteilhaft, da der Drucksensor einfach und im Vergleich zu einem Beschleunigungssensor, der z. B. Massen an Biegebalken hat, robust ausgestaltet sein kann. Ferner ist es für einen Drucksensor inhärent, dass er, wenn er innerhalb des beweglichen Spielgeräts angeordnet ist, keine gerichtete Größe, sondern eine richtungsunabhängige Größe ausgibt, was bei Beschleunigungssensoren nur durch eine aufwändige Bereitstellung eines Beschleunigungssensorarrays, das in drei Raumrichtungen sensitiv sein muss, erreicht werden könnte. Dagegen reicht ein einziger Drucksensor aus, um einen Druckverlauf des Innendrucks des beweglichen Spielgeräts zu liefern.

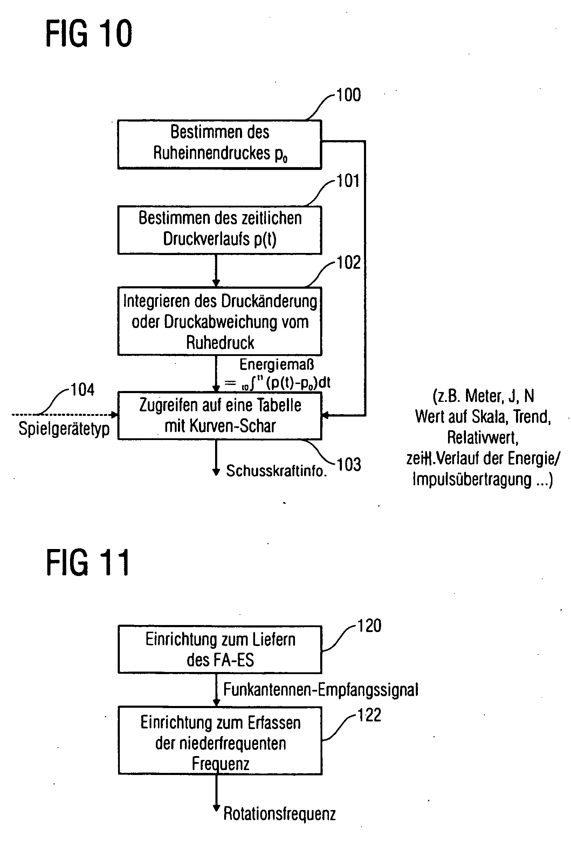

Die Verwendung eines Drucksensors schafft somit eine wartungsfreie, robuste und zugleich preisgünstige Möglichkeit, um den Druckverlauf in einem beweglichen Spielgerät zu messen, und um dann, wie es noch bezugnehmend auf die Fig. 8 und 10 dargelegt wird, eine Schusskraftinformation zu erhalten.

Bei einem bevorzugten Ausführungsbeispiel der vorliegenden Erfindung wird der Druckverlauf über der Zeit zwischen t₀ und t₁ integriert, und zwar gemäß der Gleichung, wie sie in Fig. 7 gezeigt ist. Daraus ist ersichtlich, dass nicht der absolute Druckverlauf, sondern der Verlauf der Druckänderung im Vergleich zum Ruhedruck p₀ integriert wird. Allerdings könnte auch der absolute Druckverlauf integriert werden, um dann die Fläche 97 nach der Integration zu subtrahieren. Diese ergibt sich einfach aus dem Produkt der Zeitdauer Δt und dem Ruhedruck.

Wie es aus Fig. 8 ersichtlich ist, hängt die Schusskraft stark davon ab, wie hoch der Ruhedruck ist. Dies ergibt sich aus Fig. 8 aufgrund der verschiedenen Parameterkurven, wobei eine Parameterkurve 97 für einen kleinen Ruhedruck p₀ eingezeichnet ist, während eine andere Parameterkurve für einen hohen Druck p₀ bei 98 eingezeichnet ist. Insbesondere stellt die x-Achse der Kurvenschar von Fig. 8 die integrierte Druckänderung als Maß für die Energie dar, also - in physikalischen Einheiten berechnet, ein Maß, das als Einheit (Pascal x Sekunden) hat. Anschaulich gesprochen ist über der x-Achse die Fläche 96 der in Fig. 7 gezeigten Kurve aufgetragen. Wenn von einem Ball ausgegangen wird, der einen kleinen Innendruck hat, so ergibt sich je nachdem, wie fest der Ball getroffen wird, wie groß also die Schusskraft ist, ein Schusskraftwert entlang der Gerade. Wird dagegen mit einem stark aufgepumpten Ball gespielt, so ist bei derselben integrierten Druckänderung als Maß für die Energie im Vergleich zu Kurve 97 bereits eine sehr viel höhere Schusskraft erhalten worden. Dies liegt daran, dass ein stark aufgepumpter Ball auch durch einen sehr starken Schuss wenig verformt wird, während ein sehr schwach aufgepumpter Ball bereits durch einen relativ leichten. Schuss stark verformt wird, wobei die Verformung mit der integrierten Druckänderung korrespondiert.

Alternativ oder zusätzlich kann auch der Maximaldruck pₘₐₓ des Druckverlaufs über der Zeit durch die Einrichtung 92 von Fig. 9 bestimmt werden. Für einfachere Auswertungen kann nämlich angenommen werden, dass der Verlauf des Drucks über der Zeit, also wie der Schuss auf den Gegenstand einwirkt, für alle Schüsse etwa gleich angenommen werden, derart, dass dann der Maximalwert allein entscheidend ist. In diesem Fall würde eine Geradenschar bereitgestellt werden, die ähnlich zu der Kurvenschar in Fig. 8 ist, die jedoch als x-Achse nicht eine integrierte Druckänderung als Maß für die Energie hätte, sondern den Maximaldruck.

Wieder alternativ könnte man auf die Zeitdauer des Verlaufs der Druckabweichung bestimmen, die dann, wenn, typische Druckverläufe im Hinblick auf ihre Form angenähert gleich genommen werden, ebenfalls ein Maß für die Energie ist, die während des Schusses auf das Spielgerät aufgebracht worden ist.

Bei einem bevorzugten Ausführungsbeispiel der vorliegenden Erfindung wird somit, wie es in Fig. 10 dargestellt ist, zunächst der Ruheinnendruck p₀ in einem Schritt 100 bestimmt. Diese Bestimmung kann entweder vor oder nach dem Schuss stattfinden und wird dazu verwendet, um eine der Kurven in der Kurvenschar von Fig. 8 auszuwählen. Ferner wird die Druckänderung in einem Schritt 102 über der Zeit integriert, und zwar vom Zeitpunkt t₀ bis zum Zeitpunkt t₁ unter Verwendung des in einem Schritt 101 bestimmten zeitlichen Druckverlaufs p(t). Die Integration über der Druckänderung oder über der Druckabweichung vom Ruhedruck, die in Fig. 102 ausgeführt wird, liefert also das Energiemaß, das dann dazu verwendet wird, um einen Wert auf der ausgewählten Parameterkurve zu ermitteln. Vorzugsweise findet der Zugriff auf eine Tabelle mit einer Kurvenschar in einem Schritt 103 derart statt, dass eine dreidimensionale Tabelle gegeben ist, die Dreiergruppen von Werten aufweist, wobei ein erster Wert der Dreiergruppe der Ruhedruck p₀ ist, ein zweiter Wert der Dreiergruppe die integrierte Druckänderung ist, und ein dritter Wert dann die Schusskraft ist, wie sie an der y-Achse von Fig. 8 aufgetragen ist. Diese Schusskraftinformation wird durch den Schritt 103 geliefert. Wenn Fig. 9 und Fig. 10 verglichen werden, so ist ersichtlich, dass die Schritte 100 und 101 durch die Einrichtung 90 ausgeführt werden, dass der Schritt 102 durch die Einrichtung 92 ausgeführt wird, und dass der Schritt 103 durch die Einrichtung 94 ausgeführt wird.

Je nach Implementierung des Systems, also je nach geforderter Vielseitigkeit kann auch im Schritt 103 noch eine Information über den Spielgerätetyp berücksichtigt werden, der bei 104 eingespeist wird. So kann die Schusskraft davon abhängen, ob es sich bei dem Ball um einen Tennisball oder um einen Fußball handelt. Außerdem wird die Schusskraft von Fabrikat zu Fabrikat variieren. Dies ist besonders dann relevant, wenn als Schusskraft die "ideale Reichweite" des Balls genommen wird, die dann auch von der Balloberfläche abhängt. Eine glattere Oberfläche des Balls hat einen geringren Luftwiderstand, so dass bei gleicher übertragener Energie die Schusskraft - gemessen in Metern - größer sein wird als von einem Ball mit einer raueren Oberfläche. Dennoch hängen beide Schusskraftergebnisse von der in den Ball überbrachten Energie ab, und zusätzlich noch von dem über die Leitung 104 zugeführten Spielgerätetyp.

Je nach Implementierung werden alle oder nur ein Teil der in Fig. 9 gezeigten Komponenten im Spielgerät selbst sein oder in einer zentralen Vorrichtung, die entfernt von dem Spielgerät angeordnet ist.

Bei dem ersten Ausführungsbeispiel eines solchen Systems wird in dem Spielgerät selbst nur ein Beschleunigungssensor oder ein Drucksensor sein, welche ausgebildet sind, um einen zeitlichen Verlauf von Beschleunigung oder Druck zu speichern. Dieser zeitliche Verlauf von Beschleunigung oder Druck kann dann z. B. über einen Funksender zu einem Empfänger übertragen werden, der beispielsweise in Form einer Armbanduhr beim Spieler vorhanden sein könnte. Alternativ muss der Ball nicht unbedingt einen Funksensor haben, sondern kann eine Ausgabeschnittstelle haben, die dann, wenn der Ball in eine speziell ausgebildete Docking-Station gelegt wird, die gespeicherten Verläufe von Bescheunigung oder Druck ausliest. Dann würde die Verarbeitung im Block 92 und die Schusskraftinformationslieferung im Block 94 in einer externen Station, wie beispielsweise der Uhr des Spielers oder einer zentralen Empfangsstation auf einem Fußballfeld etc. stattfinden.

Alternativ kann sowohl die Funktionalität der Einrichtung 90 als auch der Einrichtung 92 im Ball integriert sein und der Ball liefert bereits das Energiemaß zu einer externen Empfangsstation. Dies hat zur Folge, dass weniger Daten vom Ball nach außen übertragen werden müssen, dass jedoch mehr Prozessor-Leistung innerhalb des Spielgeräts benötigt wird.

Alternativ können auch alle Einrichtungen 90, 92, 94 im mobilen Spielgerät implementiert sein, so dass nur die Information über die Schusskraft von dem Ball sogar direkt angezeigt wird oder aber über eine Ausgabeschnittstelle, die beispielsweise eine Funkschnittstelle oder eine Kontaktschnittstelle sein kann, ausgegeben wird.

Das in Fig. 9 gezeigte System umfasst auch die Funktionalität der externen Empfangsschnittstelle 6, wenn im Ball nur ein Sensor vorhanden ist und der Ball den zeitlichen Verlauf von Beschleunigung oder Innendruck ausgibt. Dann ist die Einrichtung 90 zum Liefern eines zeitlichen Verlaufs von Beschleunigung oder Innendruck von Fig. 9 eine Eingangsschnittstelle des externen Rechners, der zusätzlich noch die Einrichtung 92 und die Einrichtung 94 umfasst.

So kann also die Vorrichtung zum Messen der Schusskraft komplett innerhalb des mobilen Spielgeräts oder komplett außerhalb des mobilen Spielgeräts oder teilweise innerhalb des mobilen Spielgeräts und teilweise außerhalb des mobilen Spielgeräts angeordnet und implementiert sein.

Insofern umfasst die Vorrichtung zum Messen einer auf einem beweglichen Spielgerät ausgeübten Schusskraft bei einer teilweisen Implementierung sowohl das Spielgerät als auch die Auswertungsvorrichtung oder nur das Spielgerät oder nur die Auswertungsvorrichtung.

Das Spielgerät schafft also die Erfassung der Schusskraft und der daraus bestimmbaren Fluggeschwindigkeit eines Spielgeräts 7. So steht beim Fußballspiel häufig die Frage im Raum, wer den "härtesten" Schuss hat. Insbesondere für diese Ausführungsform, aber auch für die anderen Ausführungsformen besteht die Möglichkeit, die Auswerteeinheit 13 auch in der Baugruppe 15 im Spielgerät 7 zu integrieren. Im Spielgerät 7 kann ein Sensor angebracht werden, der die Schusskraft misst. Dieser Sensor ist vorzugsweise ein Drucksensor 10 oder ein Beschleunigungssensor. Die Informationen dieses Sensors werden von einem internen Mikrocontroller gemessen und zum Beispiel an die Anzeigeeinheit 14 am Datenerfassungsgerät 12 des Spielers übertragen. Für die Bestimmung der Schusskraft ist die Messung der Energie erforderlich, die der Ball beim Schuss erhalten hat. Die Auswerteeinheit 13 weist dazu zum Beispiel Mittel zur Erfassung des vom Drucksensor 10 ermittelten Drucks über die Zeit oder der vom Beschleunigungssensor erfassten Beschleunigung auf. Ferner sind Rechenmittel zur Berechnung der auf den Ball 7 vom Spieler 6 aufgebrachten Kraft anhand des Druckverlaufs oder Beschleunigungsverlaufs vorgesehen.

Beim Beschleunigungssensor wird die Beschleunigung direkt gemessen und an den Mikrocontroller im Spielgerät 7 gemeldet. Dieser berechnet aus der bekannten Masse des Balls und der gemessenen Beschleunigung die Kraft, die auf den Ball eingewirkt hat. In diese Berechnungen gehen auch die Aerodynamik und der zeitliche Verlauf der dem Ball zugeführten Energie ein. Bei der Berechnung wird nicht nur die Gesamtenergie an die Auswerteeinheit 13 übertragen, sondern auch der zeitliche Verlauf der Energieübertragung auf den Ball.

Bei der alternativen Verwendung eines Drucksensors 10 wird gemessen, wie sich der Ballinnendruck beim Schuss erhöht. Diese Druckänderungen und der zugehörige zeitliche Verlauf ermöglicht es dem Mikrocontroller im Ball die Kraft zu bestimmen, die auf den Ball eingewirkt hat. Mit Hilfe der Druckmessung kann festgestellt werden, wie stark der Ball verformt wurde. Je größer die Verformung, desto höher die Schusskraft. Hierzu wird der Spitzenwert und der Druckverlauf des Innendrucks mit Hilfe des Drucksensors 10 gemessen. Anhand einer Kurvenschar wird die Energie bestimmt, die dem Ball zugeführt wurde. Die Kurvenschar kann zum Beispiel zuvor empirisch mittels einer Schussanlage ermittelt werden und ist für jeden Ball-Typ verschieden.

Aus der übertragenen Energie und dem zeitlichen Verlauf kann dann die Schusskraft sehr genau ermittelt werden. Zur Anzeige kann neben der Schusskraft auch die Gesamtenergie gebracht werden. Dies ermöglicht es, Informationen über die Schussart zu gewinnen. So kann der Ball bei einer gleichmäßigen Energiezufuhr viel präziser gespielt werden. Wenn also die Dauer der Energiezufuhr ergänzend angezeigt wird, wozu zusätzliche Erfassungsmittel vorgesehen sein können, kann dies auch trainiert werden.

Anhand der Energie kann auch auf die Fluggeschwindigkeit geschlossen werden, die der Ball erhalten hat. Hierzu werden Gewicht und Aerodynamik des Balls berücksichtigt. Die ermittelte Fluggeschwindigkeit ist der Wert, der erreicht wird, wenn der Ball nach dem Schuss frei wegfliegen kann. Zusätzlich zur Krafteinwirkung kann mit Hilfe des Drucksensors 10 und/oder des Beschleunigungssensors auch der Zeitpunkt des Abstoßes und der Zeitpunkt der Landung des Balls ermittelt werden. Durch die Kraftinformationen und die Zeitdauer des Fluges kann recht gut berechnet werden, wie weit der Ball geflogen sein muss.

Ergänzend zu den vorstehenden Implementierungen der Ballkontakterfassung oder der Schusskraftmessung oder alternativ zu diesen Konzepten wird das erfindungsgemäße Rotationsmesskonzept implementiert, das dann, wenn es allein implementiert ist, sämtliche Komponenten benötigt, die nachstehend beschrieben werden, und das jedoch, wenn es zusätzlich zu den anderen Aspekten der Kontaktmessung und der Schusskraftmessung implementiert ist, vorteilhafterweise auf die bereits bestehenden Komponenten, wie beispielsweise die Funkschnittstelle oder einen kleinen programmierbaren Prozessor innerhalb des Balls bzw. das gesamte HF-Front-End des Balls zurückgreift.

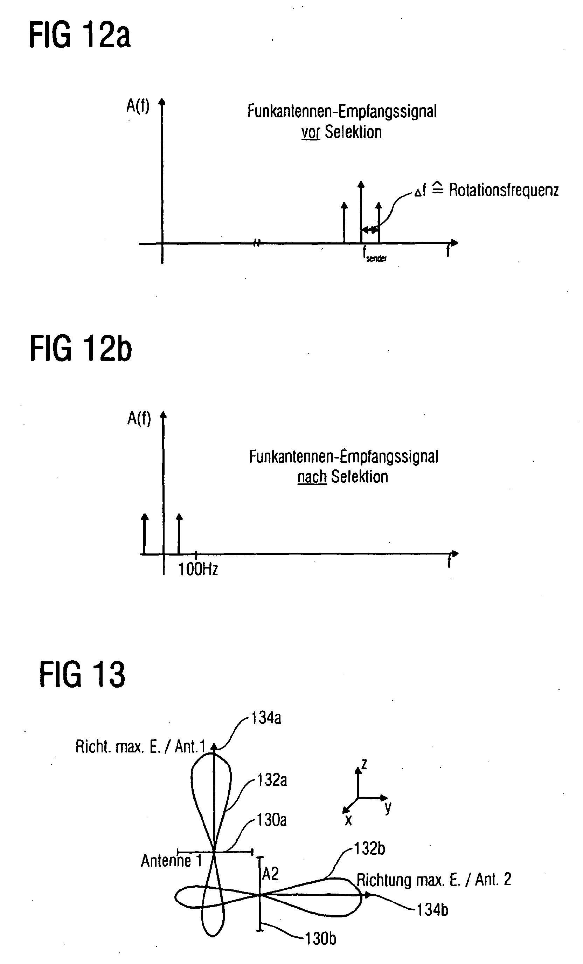

Die Vorrichtung zum Messen einer Rotationsfrequenz eines beweglichen Spielgeräts unter Verwendung eines hochfrequenten Funksignals umfasst zunächst eine Einrichtung 120 zum Liefern eines zeitlich variierenden Funkantennen-Empfangssignals. Die Einrichtung 120 kann dann, wenn sie im Spielgerät implementiert ist, eine oder mehrere Antennen umfassen, die für bestimmte Empfangsfrequenzbereiche ausgebildet sein können. Ist die in Fig. 12 gezeigte Vorrichtung jedoch extern komplett in einem Überwachungsgerät, wie beispielsweise einer Uhr integriert, so ist die Einrichtung 120 zum Liefern des Funkantennen-Empfangssignals als Funk-Eingangsschnittstelle der Uhr, also des entfernten Kommunikationsgeräts, das nicht im Ball integriert ist, ausgebildet.

Je nach Implementierung ist das Funkantennen-Empfangssignal ein Signal mit einem beispielhaften Spektrum wie in Fig. 12a vor der Selektion. Alternativ ist das Funkantennen-Empfangssignal bereits ein Basisbandsignal nach einer Selektion, wie es in Fig. 12b dargestellt ist. Ist die Vorrichtung gemäß Fig. 11 innerhalb des mobilen Spielgeräts ausgebildet, so wird die Einrichtung zum Liefern des Funkantennenempfangssignals als Antenne implementiert sein, die das Spektrum von Fig. 12a liefert, wobei dann eine nachgeschaltete Einrichtung 122 zum Erfassen einer auf das hochfrequente Funksignal aufmodulierten vergleichsweise niederfrequenten Frequenz dann zunächst die Selektion durchführt, um das Spektrum von Fig. 12b zu erhalten, und um dann die Frequenz der dominierenden Komponente dieses Spektrums zu bestimmen.

Ist dagegen das Funkantennen-Empfangssignal bereits ein selektiertes Signal mit einem Spektrum gemäß Fig. 12b, so wird die Einrichtung 122 zum Erfassen der auf das hochfrequente Funksignal aufmodulierten vergleichsweise niederfrequenten Frequenz bereits die niederfrequente Frequenz erhalten und muss nur noch den Wert dieser Frequenz messen, um ausgangsseitig eine Rotationsfrequenzanzeige zu liefern.

Ein Spektrum des Funkantennen-Empfangssignals vor der Selektion ist beispielhaft in Fig. 12a gezeigt, wobei die Senderfrequenz, also die Trägerfrequenz eines Rundfunksenders, Fernsehsenders oder Mobilfunksenders mit f_{Sender} bezeichnet ist. Die beiden Bänder einer durch Drehung des mobilen Spielgeräts in dem Feld entstehenden Amplitudenmodulation sind ebenfalls gezeigt, wobei der Wert Δf, also der Abstand der beiden Seitenbänder zur Trägerfrequenz gleich der Rotationsfrequenz ist.

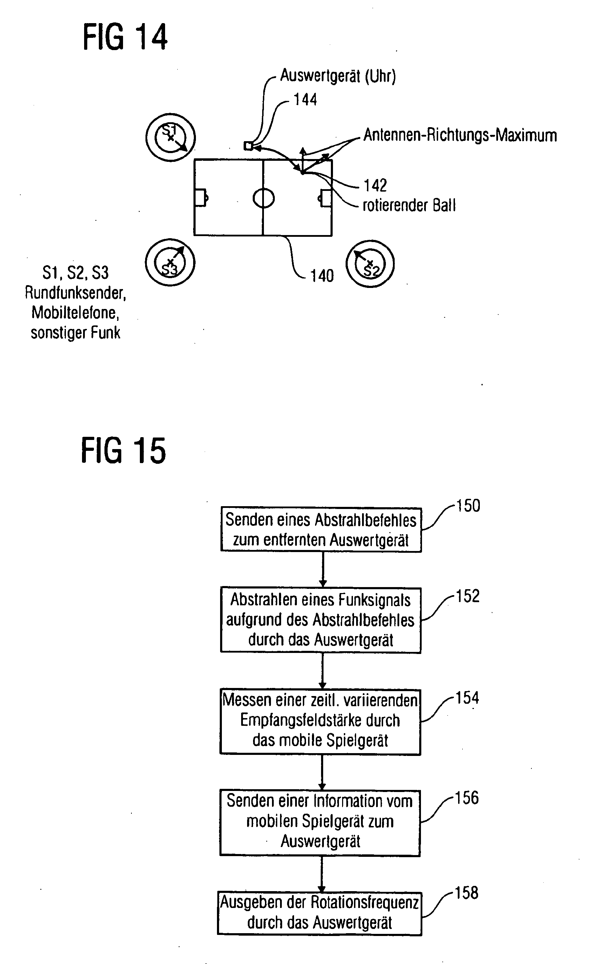

Hat das zur Rotationsdetektion "ausgenutzte" Funkfeld selbst eine Modulation im Bereich der Rotationsfrequenz, so wird sich die Modulation aufgrund der Rotationsfrequenz dieser bereits funkinhärenten Modulation überlagern. Aufgrund der Tatsache, dass typische Dipolantennen beispielsweise starke Richtcharakteristika haben, wird die Modulation aufgrund der Rotation sehr stark sein, so dass eigentlich immer deutliche Seitenbänder detektierbar sind.. Sollte dies jedoch einmal nicht der Fall sein, so kann ohne Weiteres auf irgendeinen anderen Sender zurückgegriffen werden, der im gesamten Spektrum der Funkfrequenzen gerade aktiv ist und eine solche funkinhärente niederfrequente Modulation nicht hat. So ist es außerordentlich unwahrscheinlich, dass einmal kein einziger Sender verfügbar ist, der eine solche niederfrequente Modulation nicht hat. In diesem Fall könnte das erfindungsgemäße Konzept jedoch immer noch die geschlossene Systemfunktion aktivieren, wie sie Bezug nehmend auf Fig. 15 noch erläutert wird.

Das Funkantennen-Empfangssignal nach der Selektion ist in Fig. 12b gezeigt. Es kann auf beliebige Arten und Weisen erzeugt werden, wie beispielsweise durch Heruntermischen des Fig. 12a-Spektrums. Einfacher ist die Detektion jedoch dann, wenn eine einfache Hüllkurvendetektion vorgenommen wird, oder auf typische Rundfunk-Empfänger wie beispielsweise einen Ratio-Detektor zurückgegriffen wird. Die einfachste Art und Weise der Selektion besteht jedoch darin, eine Hüllkurvendetektion unter Verwendung eines Spitzenwertdetektors vorzunehmen, um die niederfrequente Modulationskomponente zu extrahieren. Ein Funkantennen-Empfangssignal nach der Selektion ist beispielsweise in Fig. 12b gezeigt, welches nur noch eine niederfrequente Modulationsschwingung umfasst, deren Frequenz durch beliebige Art und Weisen durch die Einrichtung 122 zum Erfassen detektiert werden kann. Beispielhaft kann die Einrichtung 122 ausgebildet sein, um eine Extremwert-Detektion in dem Zeitsignal nach der Selektion durchzuführen, um beispielsweise zwei benachbarte Maxima, zwei benachbarte Minima oder ein benachbartes Maxima und ein benachbartes Minima zu ermitteln und um daraus dann den zeitlichen Abstand zu berechnen, der mit der Rotationsfrequenz zusammenhängt. Im Falle der Detektion von zwei benachbarten Maxima oder zwei benachbarten Minima ist die Rotationsfrequenz gleich dem Kehrwert der zwischen zwei benachbarten Maxima oder Minima vergangenen Zeitdauer. Im Fall der Erfassung von einem Maxima und einem Minima ist die Rotationsfrequenz gleich dem Kehrwert der doppelten vergangenen Zeit. Im Falle der Detektion von zwei benachbarten Nulldurchgängen des niederfrequenten Zeitsignals ist die Rotationsfrequenz gleich dem Kehrwert des Doppelten der Zeit, die zwischen zwei benachbarten Nulldurchgängen liegt.

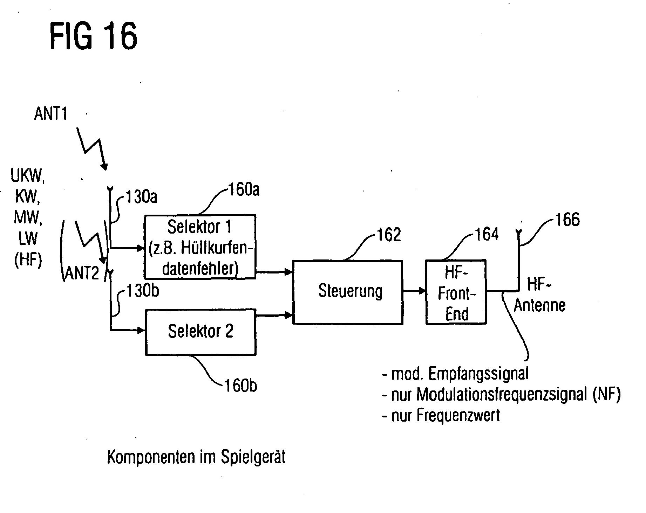

Wenn ein stark gerichtetes Feld vorhanden ist, so kann es sein, dass der Ball so bezüglich des Felds rotiert, dass keine oder nur eine sehr schwache Modulation eines bestimmten Senders erfasst wird. In diesem Fall wird es bevorzugt, zwei Antennen einzusetzen, deren Richtungen maximaler Empfindlichkeit und 90 Grad divergieren, wie es in Fig. 13 gezeigt ist. Eine erste Antenne 130a hat eine schematische Richtcharakteristik, wie sie bei 132a gezeigt ist. Eine zweite Antenne 130b hat eine Richtcharakteristik, wie sie bei 132b in Fig. 13 gezeigt ist. Beide Antennen haben Richtungen maximaler Empfindlichkeit, wie sie bei 134a bzw. 134b eingezeichnet sind. Nachdem beide Richtungen um 90° auseinander stehen, wird auf jeden Fall eine der beiden Antennensignale eine stärkere Modulation haben als das andere Antennensignal. Wenn Fig. 16 betrachtet wird, welche eine bevorzugte Implementierung der Baugruppe innerhalb des mobilen Spielgeräts bezeichnet, so wird nunmehr eine Selektion der beiden Antennen-Empfangssignale in zwei Selektorbausteinen, die beispielsweise als Hüllkurvendetektoren 160a und 160b ausgebildet sein können, eine Selektion vorgenommen, wobei die selektierten niederfrequenten Signalanteile dann innerhalb einer Steuerung 162 untersucht werden, um das bessere Signal für eine Übertragung über ein nachgeschaltetes HF-Front-End 164 und die nachfolgende Übertragung über die HF-Antenne 166 auszuwählen. Alternativ kann die Steuerung 162 auch ausgebildet sein, um beide Selektorausgangssignale zu addieren. Alternativ könnte es auch einen Vorteil bringen, eine Addition auf HF-Seite durchzuführen, so dass nur ein einziger Selektor benötigt wird, der die addierten Antennensignale einer Selektion unterzieht. Noch andere Alternativen bestehen darin, beide HF-Antennensignale entweder vor oder nach der Selektion vom Ball zum Auswertegerät zu übertragen, wobei dann, wenn bereits die HF-Signale vom Ball zum Auswertegerät übertragen werden, sämtliche Signalverarbeitung in dem Auswertegerät stattfinden wird. Die Einzelimplementierung wird von sonstigen Randbedingungen abhängen, wie beispielsweise der Verfügbarkeit an elektrischem Strom innerhalb des Spielgeräts, wobei dann, wenn die Batterieanforderungen besonders hoch sind, möglichst wenig Funksignale übertragen werden, da das Senden einen erheblichen Teil der für die gesamte Verarbeitung nötigen Energie in Anspruch nimmt. Sind dagegen die Anforderungen an den Energieverbrauch des Spielgeräts nicht ganz so groß, so wird das Spielgerät bei speziellen Implementierungen beide oder nur ein HF-Signal oder beide oder nur ein NF-Signal zur Auswertestation übertragen, da anhand dieser Informationen noch andere Auswertungen vorgenommen werden können, wie beispielsweise aerodynamische Berechnungen, Geschwindigkeitsberechnungen etc.

Fig. 14 zeigt ein Gesamtszenario mit drei verschiedenen Sendern S1, S2, S3, die alle derartige Antennen haben, dass sie Rundstrahlcharakteristik haben, was insbesondere dann gilt, wenn die Sender Fernseh-Sender, Radio-Sender, oder allgemein gesagt Rundfunksender sind, oder wenn die Sender Mobiltelefon-Basisstationen oder sogar einzelne Mobiltelefone sind, welche typischerweise in großen Mengen in einem Fußballstadion vorhanden sind, welches schematisch bei 140 in Fig. 14 gezeigt ist.

In Fig. 14 ist ferner ein mobiles Spielgerät 142 beispielhaft als Fußball gezeichnet, wobei ferner die Antennen-Richtungs-Maxima 134a, 134b, wie sie Bezug nehmend auf Fig. 13 dargelegt worden sind, eingezeichnet sind. Ferner ist ein Auswertegerät 144 eingezeichnet, das entweder außerhalb des Spielfelds, wie in Fig. 14 gezeigt, z.B. stationär oder von einer Person getragen wird, oder das alternativ als Uhr ausgebildet sein kann, die ein Benutzer an seinem Handgelenk trägt.

Typischerweise werden die Sender in unterschiedlichen Höhen angeordnet sein und unterschiedliche Sendecharakteristika haben, so dass es sehr wahrscheinlich ist, dass bereits eine einzige im Ball 142 angeordnete Antenne aufgrund einer Rotation des Balls ein Funkantennen-Empfangssignal vor der Selektion oder nach der Selektion mit einer signifikanten NF-Amplitude aufgrund der Rotation des Balls liefern wird. Typischerweise werden diese NF-Amplituden unter 100 Hz liegen, wenn an Fußbälle gedacht wird. So existieren jedoch andere Anwendungen, bei denen die Rotationen höher oder niedriger sein können. Je nach mit der Erfindung bestücktem Ball kann somit nach anderen niederfrequenten Komponenten gesucht werden.

Bisher wurde die vorliegende Erfindung anhand eines offenen Systems beschrieben, bei dem auf externe Funkfelder zurückgegriffen wird, deren Vorhandensein gemäß der vorliegenden Erfindung also nicht als "Elektrosmog" oder etwas Ähnliches aufgefasst wird, sondern als Detektionsfeld, das vorteilhaft zur Rotationsfrequenzmessung ausgenutzt wird.

Alternativ oder zusätzlich kann die vorliegende Erfindung auch als geschlossenes System betrieben werden, was insbesondere dann mit nur geringstem Aufwand zu implementieren ist, wenn der Ball ohnehin über eine Funkschnittstelle mit einem HF-Front-End und einer Antenne verfügt, wie es bei bevorzugten Ausführungsbeispielen der Fall ist. Dann kann der Ball, wenn er beispielsweise feststellt, dass kein vernünftiges Funkfeld existiert oder einfach auf Benutzeranforderung oder dann, wenn keine Zusatzempfangsantennen vorgesehen sind, einen Abstrahlbefehl zum entfernten Auswertegerät 150 senden. Das entfernte Auswertegerät sendet dann typischerweise ein unmoduliertes Funksignal aufgrund des Abstrahlbefehls durch das Auswertegerät, wie es bei 152 gezeigt ist. Hierauf misst das mobile Spielgerät eine zeitliche Variation der Empfangsfeldstärke. Alternativ kann diese Messung auch durch das Auswertegerät stattfinden, um eine Messung gemäß dem Schritt 154 zu erreichen. Schließlich sendet das mobile Spielgerät eine Information zum Auswertegerät, wie es bei 156 gezeigt ist, welche auf die Rotationsfrequenz des mobilen Spielgeräts hinweist. Dem Auswertegerät bleibt dann eine Ausgabe der Rotationsfrequenz vorbehalten, wie es bei 158 in Fig. 15 gezeigt ist.

Die Rotationsinformation kann zum Trainieren von sogenannten "Bananenflanken" im Fußball verwendet werden. Hierzu ist es wichtig, dass der Anwender sofort eine Rückmeldung über seinen Schuss bekommt. Dazu wird die Rotationsgeschwindigkeit im Ball gemessen und per Funk 1 auf das Datenerfassungsgerät 12 des Spieles übertragen. Die Komponenten sind dabei so anzuordnen, dass sich bei deren Bewegung bei Rotation des Spielgeräts 7 in einem Funkenergierfeld eine von der Auswerteeinheit 13 bestimmbare Modulationsfrequenz ergibt, die in die Rotationsgeschwindigkeit umgerechnet werden kann.

Der Sensor misst also das Funkfeld und bestimmt die Feldstärke. Rotiert der Ball, so erfährt die Feldstärke eine Modulation. Die Frequenz der Modulation ist direkt proportional zur Rotationsgeschwindigkeit des Balls. Bei der Messung des Funkfeldes wird der Richtungsvektor des Funkfeldes bestimmt. Die Rotation dieses Vektors ist proportional zur Ballrotation. Für die Zwecke der Rotationsmessung ist weder eine Linearität der Messung noch eine Richtungsbestimmung des Feldes notwendig. Rotiert der Ball, so ist der Eingangsspannung eine Wechselspannung überlagert, deren Frequenz die Rotationsfrequenz des Balls ist. Die Frequenz dieser Wechselspannung ist die Rotationsfrequenz des Balls.

Die Auswertung dieser Spannung kann entweder diskret über eine analoge Schaltung oder mit Hilfe eines Mikrocontrollers erfolgen. Um bei jeder möglichen Rotationsachse des Balls ein auswertbares Signal zu erhalten, werden, wie es ausgeführt worden ist, zwei um 90° versetzte Empfangsantennen verwendet.

Erfindungsgemäß werden also Funksender verwendet, die in einem offenen System typischerweise existierende Funksender sind und in einem geschlossenen System von der Auswerteeinheit selbst erzeugt werden.

Um die Rotationsgeschwindigkeit zu bestimmen, können auch Funksender verwendet werden. Dabei wird die Feldstärkeänderung irgendeines Funksenders zum Beispiel eines Mittelwellensenders verwendet. Die Frequenz der Feldstärkeänderung ist proportional der Rotationsfrequenz. Als Antenne kann neben einem Dipol eine Spule oder eine Ferrit-Antenne verwendet werden. Da in jedem Land genügend aktive Lang-, Mittel- und Kurzwellensender vorhanden sind, braucht man in dem System keine eigenen Sender zu betreiben. Sollen Sender mit relativ hoher Frequenz als Referenz verwendet werden, kommt eine Dipol-Antenne in Betracht, die zum Beispiel in Form von Leiterbahnen auf die Ballelektronik oder auch auf die Hülle des Balls aufgebracht werden kann. Eine Rahmen-Antenne ist für niedrige Frequenzen geeignet. Diese kann als Spule in Form von Leiterbahnen für die Baugruppe 15 der Ball-Elektronik aufgebracht werden. Eine Ferrit-Antenne ist für niedrige Frequenzen geeignet. Diese kann sehr klein aufgebaut werden und erzeugt dennoch ein relativ großes Ausgangssignal. Bei allen Antennen ist es notwendig, dass zwei Empfangsrichtungen aufgebaut werden, damit bei jeder beliebigen Rotationsachse ein Signal gemessen werden kann. Bei der Signalmessung kommt es nur auf die Feldstärke an. Hierzu wird ein Verstärker mit einer großen Dynamik notwendig. Die Verstärkung sollte zum Beispiel logarithmisch sein, damit der A/D Wandler des Mikrocontrollers nicht zu breit sein muss.

Die Daten und die Steuerung der Ball-Elektronik übernimmt ein extrem stromsparender Mikrocontroller. Dieser wird beim Beginn des Spiels geweckt. Stellt der Mikrocontroller über längere Zeit kein Spiel mehr fest, schaltet er sich automatisch ab. Die Hauptaufgabe des Mikrocontrollers 11, der auch oder zusätzlich zu dem Mikrocontroller 11 im Datenerfassungsgerät im Spielgerät integriert sein kann, ist es die Daten so aufzubereiten, dass diese mit möglichst wenig Energie per Funk 1 übertragen werden können. Die Daten werden per Funk z.B. über eine 2,4 GHz Funkstrecke vorzugsweise mehrfach gesendet, um Fehler korrigieren zu können.

Die Stromversorgung kann in bekannter Weise auf zwei Arten realisiert werden. Zum einen kann ein Akku verwendet werden, der allerdings eine Ladevorrichtung benötigt. Zum anderen kann eine Primärbatterie 21 im Datenerfassungsgerät und eine Primärbatterie 22 im Spielgerät 7 verwendet werden, wobei diese im Ball allerdings nicht ausgewechselt werden kann.

In der Akku-Version wird im Ball eine Ladespule angebracht mit deren Hilfe induktiv der Akku geladen werden kann. Bei der Version mit Batterie 22 wird der Ball über Lithium-Batterien versorgt. Die Kapazität ist so ausgelegt, dass über 1000 Stunden die Funktion der Elektronik sichergestellt ist. Bei einer durchschnittlichen Spieldauer von 1 Stunde am Tag würde die Batterie 3 Jahre halten.

Im Datenerfassungsgerät 12 ist als Empfangseinheit 2 ein Transceiver integriert. Dieser empfängt die Daten aus dem Ball bzw. kann eine Verbindung zu anderen Datenerfassungsgeräten aufbauen, um Daten auszutauschen. Das Senden und Empfangen der Daten findet z.B. im 2,4 GHz Band statt.

Der Transceiver kann Daten empfangen und senden. Damit ist es möglich, die Datenerfassungsgeräte untereinander zu koppeln. Dadurch können während des Spiels die Ballkontakte auf die anderen Datenerfassungsgeräte übertragen werden, so dass im Netzwerk eine sehr genaue statistische Datenmenge entsteht, um das Spiel beurteilen zu können. Durch die Datenübertragung ist es bedarfsweise auch möglich, kleine Computerspiele zu ermöglichen, in denen die Anwender vernetzt spielen können.

Die Daten im Datenerfassungsgerät 12 werden mit Hilfe eines relativ großen Mikrocontrollers 11 aufbereitet. Dieser Mikrocontroller ist extrem stromsparend. Die Daten werden über den Transceiver ausgetauscht und auf einer Anzeigeeinheit 14 visualisiert.

Die aufbereiteten Daten werden mit Hilfe eines grafischen Displays angezeigt. Das Display hat einen integrierten Controller, an dem der Mikrocontroller angeschlossen ist. Die Bedienung erfolgt über mehrere Tasten 20, deren Funktion dynamisch ist.

Die Stromversorgung des Datenerfassungsgeräts 12 muss sehr stromsparend aufgebaut sein. Die Batterie 21 kann ausgewechselt werden. Der Mikrocontroller 11 und das Display sind extrem stromsparend. Die Datenübertragung wird so gestaltet, dass der Transceiver immer nur sehr kurzzeitig in Betrieb ist.

Bei der Ball-Version mit Akku ist eine Ladestation notwendig. Da es keine leitungsgebundene Verbindung zur Ball-Elektronik gibt, ist es notwendig, den Ball in bekannter Weise induktiv zu laden. Hierzu hat die Ladestation eine Sendespule, mit deren Hilfe die Energie in den Ball übertragen wird.

Um mit anderen Auswerteeinheiten kommunizieren zu können, ist eine Umsetzung der Funkverbindung in ein anderes Protokoll notwendig. Da hier zu 99% ein üblicher PC in Frage kommt, ist eine Umsetzung z.B. nach USB vorgesehen.

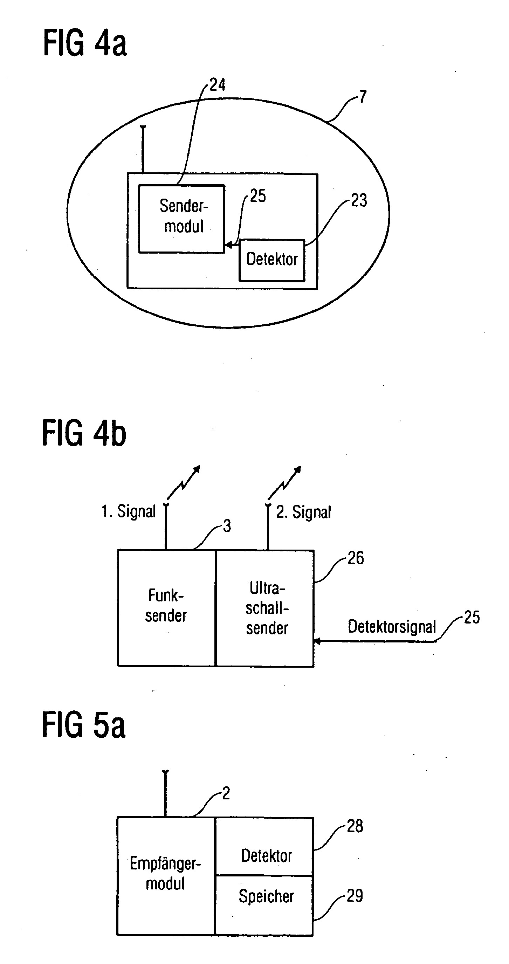

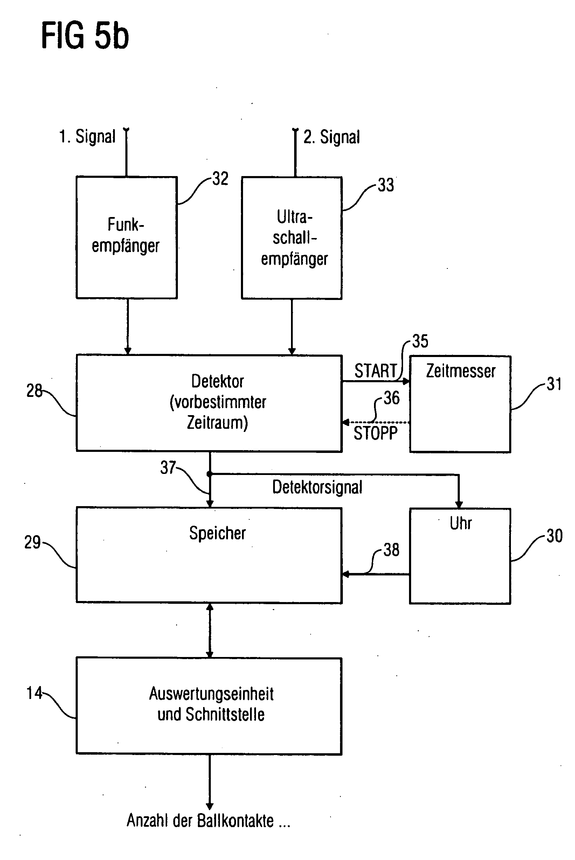

Nachfolgend wird noch einmal näher auf die miteinander zusammenwirkenden Komponenten des bevorzugten Konzepts, nämlich der beweglichen Vorrichtung anhand von Fig. 4a und Fig. 4b und der Empfängervorrichtung anhand von Fig. 5a und Fig. 5b näher eingegangen. Die bewegliche Vorrichtung 7 enthält einen Detektor 23, der z.B. der Drucksensor 10 von Fig. 3 sein kann, welcher erfasst, wenn der Ball 7 berührt wird. Der Detektor 23 kann jedoch einen berührungslosen Sensor umfassen, der auf elektrische, akustische, optische oder elektromagnetische Art und Weise arbeitet und z.B. erfasst, ob sich dem Ball ein irgendwie geartetes magnetisches oder elektrisches Feld nähert, das z.B. von einem entsprechenden Sender in dem Schuh eines Fußballspielers erzeugt wird. Der Detektor 23 ist ausgebildet, um zu erfassen, dass sich ein Objekt, also z.B. ein Bein, ein Fuß, ein Schuh, ein Schläger oder etwas ähnliches in der Nähe oder an dem Spielgerät befindet.

Ferner umfasst die bewegliche Vorrichtung 7 ein Sendermodul 24, das ausgebildet ist, um ein erstes Signal, das eine erste Signalgeschwindigkeit aufweist, zu senden, und um ferner ein zweites Signal, das eine zweite Signalgeschwindigkeit hat, die kleiner als die erste Signalgeschwindigkeit ist, zu senden. Das Sendermodul ist ausgebildet, um ansprechend auf ein Detektorausgangssignal das erste und das zweite Signal auszusenden, wie es durch den Signalpfeil 25 in Fig. 4a gezeigt ist.

Wie es bereits ausgeführt worden ist, ist der Detektor 23 ein Berührungssensor, der ausgebildet ist, um eine Berührung der beweglichen Vorrichtung durch das Objekt zu erfassen. Ein solcher Berührungssensor ist z.B. der Drucksensor, ist allerdings auch ein Beschleunigungssensor, oder irgendein anderer Sensor, der erfasst, ob das Objekt die Oberfläche des Spielgeräts 7 in Eingriff nimmt. Alternativ kann der Detektor auch als berührungsloser Sensor ausgebildet sein, welcher, wie es ausgeführt worden ist, auf irgendeine Art und Weise erfasst, dass sich ein Objekt in der Nähe der beweglichen Vorrichtung befindet. Für bestimmte Ausführungsformen ist ein berührungsloser Sensor geeignet, der erfasst, ob sich ein Objekt in einem vorbestimmten Abstand, der gleich oder kleiner als 10 cm ist, von der beweglichen Vorrichtung entfernt befindet. Dann kann mit hoher Wahrscheinlichkeit davon ausgegangen werden, dass das Objekt die bewegliche Vorrichtung auch berührt, da es nur das Ziel ist, das Objekt in Berührung mit der beweglichen Vorrichtung zu bringen, wenn beispielsweise an einen Fußball als bewegliche Vorrichtung oder einen Tennisball gedacht wird. Hier kann man nahezu sicher davon ausgehen, dass, wenn sich das Objekt einmal innerhalb des vorbestimmten Abstands befindet, das Objekt schließlich auch einen Kontakt mit der beweglichen Vorrichtung haben wird.

Das Sendermodul ist ausgebildet, um zwei Signale unterschiedlicher Signalgeschwindigkeiten zu senden. Vorzugsweise wird als erstes schnelles Signal ein Funksignal verwendet, das von dem Funksender 3 erzeugt wird. Das zweite Signal wird von einem Schallsender 26 erzeugt, welcher vorzugsweise als Ultraschallsender ausgebildet ist. Beide Sender werden von dem Detektorsignal, das über die Leitung 25 zugeführt wird, gesteuert, um ansprechend auf das Detektorsignal zeitgleich oder im Wesentlichen zeitgleich also innerhalb eines Zeitraums von z.B. 1 bis 2 ms beide Signale abzusenden. Alternativ können die Sender jedoch ausgebildet sein, so dass die Funksender das erste Signal zu einem bestimmten Zeitpunkt, der durch das Detektorsignal 25 bestimmt wird, sendet, und dass der Ultraschallsender dann noch eine vorbestimmte Zeitdauer wartet, bevor das Ultraschallsignal ausgesendet wird. Hierbei würde dann auf Empfängerseite der Empfang des Funksenders auch nicht unmittelbar zur Aktivierung eines Zeitmessers führen, sondern der Zeitmesser würde in einer vordefinierten Zeitdauer nach Empfang des ersten Signals aktiviert werden, also nicht unmittelbar bei Empfang des ersten Signals aber abhängig von dem Empfang des ersten Signals.

Alternativ könnte die Ballkontakterfassung auch dazu verwendet werden, um zunächst das Ultraschallsignal abzusenden, um dann nach einer bestimmten Zeitdauer das Funksignal auszusenden, das dann das Ultraschallsignal gewissermaßen überholt, so dass auf Empfängerseite eine sehr kurze vorbestimmte Zeitdauer ausreicht, innerhalb derer das Funksignal und das Ultraschallsignal ankommen. Allerdings wird es bevorzugt, dass beide Sender zeitgleich ihre Signale aussenden und dass eine entsprechend längere vorbestimmte Zeitdauer auf Empfängerseite eingesetzt wird bzw. dass auf Empfängerseite unmittelbar bei Empfang des Funksenders der Zeitmesser gestartet wird.

Die vorbestimmte Zeitdauer hängt von der Differenz der Geschwindigkeiten des schnellen ersten Signals und des langsamen zweiten Signals ab. Je kleiner diese Geschwindigkeitsdifferenz ist, umso kleiner kann auch die vorbestimmte Zeitdauer gewählt werden. Je größer die Geschwindigkeitsdifferenz ist, umso größer muss die vorbestimmte Zeitdauer eingestellt werden. Ferner hängt die vorbestimmte Zeitdauer davon ab, ob das erste und das zweite Signal wirklich zeitgleich abgesendet werden oder ob das erste und das zweite Signal zeitversetzt abgesendet werden, wobei eine Verzögerung des zweiten Signals bezüglich des ersten Signals zu einer Verzögerung des Starts der vorbestimmten Zeitdauer führt, während eine Verzögerung des ersten Signals gegenüber dem zweiten Signal zu einer kleineren vorbestimmten Zeitdauer führt. Generell werden jedoch vorbestimmte Zeitdauern kleiner als 5 ms bevorzugt, wie es bereits ausgeführt worden ist.

Auf Empfängerseite steht, wie es in Fig. 5b gezeigt ist, das Empfängermodul mit einem Detektor 28 in Verbindung, der mit einem Speicher 29 gekoppelt sein kann, oder der mit einem weiteren Funksender innerhalb der Empfängervorrichtung gekoppelt sein kann, was jedoch in Fig. 5a nicht gezeigt ist. Detektor und Speicher 29 sind vorzugsweise in der Auswerteeinheit 13 von Fig. 3 enthalten. Die insgesamt in Fig. 3 unten gezeigte Empfängervorrichtung bzw. die in Fig. 5a gezeigte Empfängervorrichtung ist vorzugsweise so ausgebildet, dass sie in einer Armbanduhr integriert ist bzw. Form und Aussehen einer Armbanduhr hat, so dass sie von einem Fußballspieler beispielsweise oder von einem Tennisspieler gut getragen werden kann, ohne dass dieser in der Ausübung seines Sports beeinträchtigt wird. Allgemein gesagt wird die Empfängervorrichtung an dem Objekt, dessen Nähe zur beweglichen Vorrichtung von dem Detektor 23 von Fig. 4a erfasst wird, anbringbar und hat eine entsprechende Anbringvorrichtung, die in Fig. 5a nicht gezeigt ist, die jedoch z.B. die Form eines Uhrenarmbands, einer Halterung für ein Armbad, eines Clipses oder eine andere Befestigungsvorrichtung hat, die in irgendeiner Art und Weise an dem Objekt bzw. an einem Spieler angebracht werden kann.

Das Empfängermodul 2 ist ausgebildet, um das erste Signal mit der ersten Signalgeschwindigkeit und das zweite Signal mit der zweiten Signalgeschwindigkeit, die kleiner als die erste Signalgeschwindigkeit ist, zu empfangen. Ferner ist der Detektor 28 ausgebildet, um ein Detektorsignal zu liefern, das anzeigt, ob innerhalb eines vorbestimmten Zeitraums seit einem Empfang eines ersten Signals das zweite Signal empfangen worden ist. Ferner ist der Detektor vorzugsweise mit dem Speicher 29 gekoppelt, der ausgebildet ist, um zu speichern, wenn der Detektor das Detektorsignal liefert. Alternativ kann statt des Speichers auch ein weiterer Sender vorhanden sein, der ausgebildet ist, um das Detektorsignal zu einer zentralen Erfassungsstelle zu senden, in der dann z.B. eine Online-Auswertung von Ballkontakten für die einzelnen Spieler stattfindet.

Eine solche Online-Erfassungsstelle wäre beispielsweise ein Empfänger, der an irgendeiner Stelle in der Nähe eines Fußballfeldes angeordnet ist. In diesem Fall würde jede Empfängervorrichtung ausgangsseitig einen Kontakt mit der beweglichen Vorrichtung zusammen mit einer Identifikation für den Spieler, der die Empfängervorrichtung trägt, aussenden, so dass unbestreitbare statistische Daten erhoben werden können, welcher Spieler wie viel Ballkontakte hatte.

So stellt sich in letzter Zeit heraus, dass solche Informationen über Ballkontakte etc. immer mehr bei Fußballspielen beispielsweise erfasst, gezeigt und einem breiten Publikum bzw. dem Kommentator bereitgestellt werden, um den Informationsgehalt für die Zuschauer zu erhöhen.

Bei der Implementierung mit dem Speicher 29 ist beispielsweise keine zentrale Empfängervorrichtung auf dem Fußballfeld nötig. Stattdessen kann der Speicher dann z.B. in der Halbzeitpause oder am Ende des Spiels oder berührungslos während des Spiels ohne Spielerinteraktion ausgewertet werden, um entweder für jeden Spieler einen Zählwert zu erhalten, der angibt, wie oft der Spieler einen Kontakt mit der beweglichen Vorrichtung hatte. In diesem Fall wäre der Speicher 29 als Zähler implementiert, der bei jeder Erfassung des Detektorsignals um 1 inkrementiert wird. Alternativ oder zusätzlich kann der Speicher auch eine absolute Zeit einer in der Empfängervorrichtung vorzugsweise enthaltenen Uhr erfassen, die in Fig. 5b bei 30 gezeichnet ist. Dann würde der Speicher eine Folge von Zeitpunkten speichern, die dann ausgewertet werden können, um für jeden Spieler ein "Ballkontaktprofil" über der Zeit aufstellen zu können. Hierbei können nachträglich auch möglicherweise noch stattgefundene Fehlerfassungen korrigiert werden, wenn z.B. herausgefunden werden würde, dass mehr als zwei Spieler gleichzeitig Kontakt mit dem Ball hatten. So ist ein Kontakt von zwei Spielern gleichzeitig noch relativ wahrscheinlich, wenn z.B. an einen "Pressschlag" gedacht wird. Sehr unwahrscheinlich wird jedoch beim Fußball beispielsweise ein Kontakt von 3 Spielern mit dem Ball zum gleichen Zeitpunkt. Beim Tennis beispielsweise ist jedoch bereits ein Kontakt von zwei Tennisschlägern zum gleichen Zeitpunkt ausgeschlossen, so dass hierbei zusätzliche Informationen über typische Situationen in einer Sportart mit dem bewegliche Spielgerät noch verwendet werden können, um eine Auswertung durchzuführen, in der dann noch Fehler eliminiert werden können.

Fig. 5b zeigt eine speziellere Ausführungsform des in Fig. 5a gezeigten Empfängers. Das Empfängermodul umfasst einerseits einen Funkempfänger 32 zum Empfangen des ersten schnellen Signals und einen Ultraschallempfänger 32 zum Empfangen des zweiten langsameren Signals. Funkempfänger und Ultraschallempfänger können auch anders ausgeführt werden, solange sie irgendwelche Signale empfangen, die unterschiedliche Signalgeschwindigkeiten haben. Ein Detektor 28 aktiviert in Abhängigkeit eines empfangenen Funksignals einen Zeitmesser 31 über eine Start-Leitung 35. Nach Verstreichen einer vorbestimmten Zeitdauer bzw. des vorbestimmten Zeitraums wird der Zeitmesser gestoppt, was typischerweise so erfolgen wird, dass der Zeitmesser 31, der auf den vorbestimmten Zeitraum eingestellt ist, ein Stopp-Signal über eine Stopp-Leitung 36 an den Detektor liefert.

Erfasst der Detektor nach Erhalt des Stopp-Signals ein Ultraschallsignal, so wird kein Detektorsignal an einer Leitung 37 ausgegeben. In diesem Fall wird nämlich davon ausgegangen, dass die Empfängervorrichtung soweit von der beweglichen Vorrichtung entfernt ist, dass mit hoher Wahrscheinlichkeit gesagt werden kann, dass die bewegliche Vorrichtung nicht getroffen worden ist. Wird jedoch vom Detektor vor Erhalt des Stopp-Signals, also vor Verstreichen des vorbestimmten Zeitraums ein Ultraschallsignal empfangen, so wird das Detektorsignal 37 ausgegeben, das dann vom Speicher abgespeichert wird, wobei der Speicher beispielsweise ein Zähler ist, der durch das Detektorsignal um 1 inkrementiert wird.

Alternativ wird das Detektorsignal einer Uhr zugeführt, die eine absolute Zeitmessung durchführt, die z.B. eine tatsächliche absolute Tageszeit sein kann, die jedoch z.B. auch eine absolute Zeit ist, die z.B. bei Beginn des Spiels anfängt zu laufen und damit unmittelbar nicht eine absolute Zeit, sondern eine Spielminute eines z.B. Fußballspiels wiedergibt. Zum Zeitpunkt des Detektorsignals liefert die Uhr 30 dann über eine Datenleitung 38 dem Speicher 29 ihren aktuellen Stand, so dass der Speicher dann diesen Zeitpunkt abspeichern kann. Über eine Auswertungseinheit mit Schnittstelle, wie sie beispielsweise durch die Anzeigeeinheit 14 in Fig. 3 oder in Fig. 5b implementierbar ist, welche insbesondere mit dem Mikrocontroller 11 von Fig. 3 kooperiert, kann eine beliebige Auswertung der Spieleraktivität durchgeführt werden.

Abhängig von den Gegebenheiten können die erfindungsgemäßen Verfahren in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, daß das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt, ist die vorliegende Erfindung somit auch ein Computerprogramm mit einem Programmcode zur Durchführung des Verfahrens zum Umsetzen, wenn das Computerprogramm auf einem Computer abläuft.

## Patentansprüche

1. Vorrichtung zum Messen einer Rotationsfrequenz eines beweglichen Spielgeräts (3) unter Verwendung eines hochfrequenten Funksignals, mit folgenden Merkmalen:
einer Einrichtung (120) zum Liefern eines zeitlich variierenden Funkantennen-Empfangssignals; und
einer Einrichtung (122) zum Erfassen einer auf das hochfrequente Funksignal aufmodulierten niederfrequenten Frequenz unter Verwendung des zeitlich variierenden Funkantennen-Empfangssignals,
wobei die niederfrequente Frequenz des zeitlich variierenden Funkantennen-Empfangssignals die Rotationsfrequenz des beweglichen Spielgeräts darstellt.

2. Vorrichtung nach Anspruch 1, bei der die Einrichtung (120) zum Liefern eine Funkantenne aufweist, die für ein von einem Rundfunksignal oder Fernsehsignal oder Mobilfunksignal verwendeten Frequenzband ausgelegt ist, und die eine von einem idealen Kugelstrahler abweichende Strahlungscharakteristik hat, so dass eine Drehung der Funkantenne ein hochfrequentes Trägersignal mit einem niederfrequenten Modulationsanteil liefert.

3. Vorrichtung nach Anspruch 1 oder 2, bei der die Einrichtung (120) zum Liefern einen Selektierer (160a, 160b) aufweist, um einen niederfrequenten Modulationsanteil zu selektieren.

4. Vorrichtung nach Anspruch 3, bei die Einrichtung (122) zum Erfassen ausgebildet ist, eine Frequenz des niederfrequenten Modulationssignals als Rotationsfrequenz zu ermitteln.

5. Vorrichtung nach einem der vorhergehenden Ansprüche,
bei der die Einrichtung (122) zum Erfassen einen Extremwertdetektor oder Nulldurchgangsdetektor und einen Zeitmesser aufweist, um eine Zeitdauer zwischen zwei Extremwerten oder zwischen einem Extremwert und einem Nulldurchgang zu bestimmen, und um aus der Zeitdauer die Rotationsfrequenz zu bestimmen.

6. Vorrichtung nach einem der vorhergehenden Ansprüche,
bei der die Einrichtung (122) zum Erfassen ausgebildet ist, um eine Trägerfrequenz eines hochfrequenten elektromagnetischen Feldes zu unterdrücken, um einen niederfrequenten Modulationsanteil zu extrahieren.

7. Vorrichtung nach einem der vorhergehenden Ansprüche,
bei der die Einrichtung (122) zum Erfassen ausgebildet ist, um eine niederfrequente Hüllkurve des Funkantennen-Empfangssignals zu detektieren.

8. Vorrichtung nach einem der vorhergehenden Ansprüche,
bei der die Einrichtung (120) zum Liefern ausgebildet ist, um ein Funkantennen-Empfangssignal mit zwei Kanälen zu liefern,
wobei ein erster Kanal ein Funksignal einer ersten Empfangsantenne (130a) darstellt, und
wobei ein zweiter Kanal ein Empfangssignal einer zweiten Empfangsantenne (130b) darstellt, die eine Antennencharakteristik (132b) hat, die sich von einer Antennencharakteristik (132a) der ersten Antenne (130a) unterscheidet.

9. Vorrichtung nach Anspruch 8,
bei der die erste Funkantenne eine erste Antennencharakteristik mit einer ersten Richtung (134a) höchster Empfindlichkeit hat, und bei der die zweite Funkantenne eine zweite Antennencharakteristik mit einer zweiten Richtung (134b) höchster Empfindlichkeit hat,
wobei sich die erste Richtung und die zweite Richtung unterscheiden.

10. Vorrichtung nach Anspruch 9, bei der ein Richtungsunterschied der Richtungen höchster Empfindlichkeit vorhanden ist, der in einem Winkelbereich zwischen 70° und 110° liegt.

11. Vorrichtung nach einem der vorhergehenden Ansprüche,
bei der die Einrichtung (120) zum Liefern eine Dipol-antenne oder eine Ferritantenne oder eine Mobilfunkantenne aufweist.

12. Vorrichtung nach einem der vorhergehenden Ansprüche,
bei der die Einrichtung (120) zum Liefern auf ein Langwellen-Band, Mittelwellen-Band oder Kurzwellen-Band ausgelegt ist.

13. Vorrichtung nach einem der vorhergehenden Ansprüche, die mit dem beweglichen Spielgerät (3) mechanisch verbunden ist, und die ferner eine Ausgangsschnittstelle aufweist, um eine die Rotationsfrequenz anzeigende Information zu einem Empfänger zu übertragen.

14. Vorrichtung nach einem der vorhergehenden Ansprüche,
bei die Einrichtung (120) zum Liefern mit dem beweglichen Spielgerät mechanisch verbunden ist und die Einrichtung (122) zum Erfassen von dem beweglichen Spielgerät entfernt angeordnet ist,
wobei das bewegliche Spielgerät eine Ausgangsschnittstelle zum Übertragen des zeitlich variierenden Funkantennen-Empfangssignals zu der Einrichtung (122) zum Erfassen aufweist, und
wobei die entfernt angeordnete Einrichtung (122) zum Erfassen eine Empfangs-Schnittstelle aufweist, um ein von der Ausgangsschnittstelle des beweglichen Spielgeräts stammendes Signal zu empfangen.

15. Vorrichtung nach einem der Ansprüche 1 bis 11, die entfernt von dem beweglichen Spielgerät ausgebildet ist,
wobei die Einrichtung (120) zum Liefern eine Eingangs-Schnittstelle ist, um ein von dem beweglichen Spielgerät stammendes Signal, das Informationen über das zeitlich variierende Funkantennen-Empfangssignal aufweist, zu empfangen.

16. Vorrichtung nach einem der vorhergehenden Ansprüche, die ferner folgendes Merkmal aufweist:
einen Sender zum Senden (150) einer Information zu einem externen Sender, die bewirkt, dass der externe Sender ein Funk-Sendesignal abstrahlt (152),
wobei die Einrichtung (120) zum Liefern eine Empfangsantenne aufweist, und
wobei der Sender ausgebildet ist, um beim Senden der Informationen die Empfangsantenne zu benutzen.

17. Vorrichtung nach einem der Ansprüche 8 bis 10,
bei der die Einrichtung (122) zum Erfassen ausgebildet ist, um den ersten Kanal und den zweiten Kanal zu empfangen und den Kanal mit einer größeren NF-Amplitude in einem Bereich kleiner als 150 Hz zu selektieren.

18. Vorrichtung nach einem der vorhergehenden Ansprüche 1 bis 17,
bei der die Einrichtung (122) zum Liefern ausgebildet ist, um ein breitbandiges Funkantennen-Empfangssignal zu liefern, das mehrere niederfrequent modulierte hochfrequente Träger aufweist,
bei der die Einrichtung (122) zum Liefern ausgebildet ist, um eine NF-Komponente zu selektieren, die in mehreren modulierten hochfrequenten Trägern gemeinsam auftritt.

19. Vorrichtung nach einem der vorhergehenden Ansprüche,
bei die Einrichtung (122) zum Liefern ausgebildet ist, um ein hochfrequentes Funkantennen-Empfangssignal oder ein niederfrequentes Funkantennen-Empfangssignal zu liefern.

20. Vorrichtung nach einem der vorhergehenden Ansprüche,
bei die Einrichtung (120) zum Liefern oder die Einrichtung (122) zum Extrahieren ausgebildet ist, um einen niederfrequenten Anteil zu extrahieren, der eine Frequenz weniger als 100 Hz hat.

21. Verfahren zum Messen einer Rotationsfrequenz eines beweglichen Spielgeräts (3) unter Verwendung eines hochfrequenten Funksignals, mit folgenden Schritten:
Liefern (120) eines zeitlich variierenden Funkantennen-Empfangssignals; und
Erfassen (122) einer auf das hochfrequente Funksignal aufmodulierten niederfrequenten Frequenz unter Verwendung des zeitlich variierenden Funkantennen-Empfangssignals,
wobei die niederfrequente Frequenz des zeitlich variierenden Funkantennen-Empfangssignals die Rotationsfrequenz des beweglichen Spielgeräts darstellt.

22. Bewegliches Spielgerät (142) mit folgenden Merkmalen:
einer Funkantenne (130a) zum Liefern eines zeitlich variierenden Funkantennen-Empfangssignals mit einem hochfrequenten Trägeranteil und einem niederfrequenten Modulationsanteil;
einem Selektor (160a) zum Extrahieren des niederfrequenten Modulationsanteils; und
einer Schnittstelle (164, 166) zum Ausgeben des selektierten niederfrequenten Modulationsanteils.

23. Bewegliches Spielgerät nach Anspruch 22, das ferner folgende Merkmale aufweist:
eine Einrichtung (122) zum Erfassen einer auf das hochfrequente Funksignal aufmodulierten niederfrequenten Frequenz unter Verwendung des zeitlich variierenden Funkantennen-Empfangssignals,
bei der die Schnittstelle (164, 166) ausgebildet ist, um eine Information über eine dem niederfrequenten Modulationsanteil zugrunde liegende Frequenz statt eines Zeitverlaufs des selektierten niederfrequenten Modulationsanteils zu übertragen.

24. Mobiles Spielgerät nach einem der Ansprüche 22 oder 23, das ferner folgende Merkmale aufweist:
einen Sender zum Senden (150) einer Information zu einem externen Sender, die bewirkt, dass der externe Sender ein Funk-Sendesignal abstrahlt (152),
wobei die Einrichtung (120) zum Liefern eine Empfangsantenne aufweist, und
wobei der Sender ausgebildet ist, um beim Senden der Informationen die Empfangsantenne zu benutzen.

25. Computerprogramm mit einem Programmcode zur Durchführung des Verfahrens gemäß Patentanspruch 21, wenn das Programm auf einem Computer abläuft.

## Claims

1. A device for measuring a rotational frequency of a movable game device (3) using a high-frequency radio signal, the device comprising:
a provider (120) for providing a time-varying radio antenna receive signal; and
a detector (122) for detecting a low-frequency frequency, which has been modulated onto the high-frequency radio signal, using the time-varying radio antenna receive signal,
the low-frequency frequency of the time-varying radio antenna receive signal representing the rotational frequency of the movable game device.

2. A device according to claim 1, wherein the provider (120) comprises a radio antenna which is designed for a frequency band used by a broadcasting signal or television signal or mobile communication signal, and which has a radiation characteristic that deviates from an ideal isotropic radiator, so that a rotation of the radio antenna provides a high-frequency carrier signal having a low-frequency modulation portion.

3. A device according to claim 1 or 2, wherein the provider (120) comprises a selector (160a, 160b) for selecting a low-frequency modulation portion.

4. A device according to claim 3, wherein the detector (122) is configured to determine a frequency of the low-frequency modulation signal as the rotational frequency.

5. A device according to one of the preceding claims,
wherein the detector (122) comprises an extreme-value detector or zero-crossing detector and a chronometer to determine a time duration between two extreme values or between an extreme value and a zero crossing, and to determine the rotational frequency from the time duration.

6. A device according to one of the preceding claims,
wherein the detector (122) is configured to suppress a carrier frequency of a high-frequency electromagnetic field to extract a low-frequency modulation portion.

7. A device according to one of the preceding claims,
wherein the detector (122) is configured to detect a low-frequency envelope of the radio antenna receive signal.

8. A device according to one of the preceding claims,
wherein the provider (120) is configured to provide a radio antenna receive signal having two channels,
a first channel representing a radio signal of a first receive antenna (130a), and
a second channel representing a receive signal of a second receive antenna (130b) having an antenna characteristic (132b) which differs from an antenna characteristic (132a) of the first antenna (130a).

9. A device according to claim 8,
wherein the first radio antenna has a first antenna characteristic having a first direction (134a) of the highest sensitivity, and wherein the second radio antenna has a second antenna characteristic having a second direction (134b) of the highest sensitivity,
said first and second directions differing from each other.

10. A device according to claim 9, wherein a difference in the directions of the highest sensitivities exists, which lies within an angular range of from 70° to 110°.

11. A device according to one of the preceding claims,
wherein the provider (120) comprises a dipole antenna or a ferrite antenna or a mobile communication antenna.

12. A device according to one of the preceding claims,
wherein the provider (120) is designed for a long-wave band, a medium-wave band or a short-wave band.

13. A device according to one of the preceding claims, which is mechanically connected to the movable game device (3) and which further comprises an output interface for transferring to a receiver an item of information indicating the rotational frequency.

14. A device according to one of the preceding claims,
wherein the provider (120) is mechanically connected to the movable game device and the detector (122) is located at a distance from the movable game device,
wherein the movable game device comprises an output interface for transferring the time-varying radio antenna receive signal to the detector (122), and
wherein the detector (122) which is located at a distance from the movable game device comprises a receive interface to receive a signal stemming from the output interface of the movable game device.

15. A device according to one of the claims 1 to 11, which is implemented at a distance from the movable game device,
wherein the provider (120) is an input interface so as to receive a signal which stems from the movable game device and which comprises information about the time-varying radio antenna receive signal.

16. A device according to one of the preceding claims, further comprising:
a transmitter for transmitting (150) information to an external transmitter, said information causing the external transmitter to radiate a radio transmit signal (152),
wherein the provider (120) comprises a receive antenna, and
wherein the transmitter is configured to use the receive antenna when transmitting the information.

17. A device according to one of the claims 8 to 10,
wherein the detector (122) is configured to receive the first and second channels and to select the channel having a higher LF amplitude within a range of less than 150 Hz.

18. A device according to one of the preceding claims 1 to 17,
wherein the provider (120) is configured to provide a broad-band radio antenna receive signal comprising several low-frequency modulated high-frequency carriers,
wherein the provider (120) is configured to select an LF component which occurs in several modulated high-frequency carriers in common.

19. A device according to one of the preceding claims,
wherein the provider (120) is configured to provide a high-frequency radio antenna receive signal or a low-frequency radio antenna receive signal.

20. A device according to one of the preceding claims,
wherein the provider (120) or the extractor (122) is configured to extract a low-frequency portion having a frequency of less than 100 Hz.

21. A method of measuring a rotational frequency of a movable game device (3) using a high-frequency radio signal, the method comprising:
providing (120) a time-varying radio antenna receive signal; and
detecting (122) a low-frequency frequency, which has been modulated onto the high-frequency radio signal, using the time-varying radio antenna receive signal,
wherein the low-frequency frequency of the time-varying radio antenna receive signal represents the rotational frequency of the movable game device.

22. A movable game device (142) comprising:
a radio antenna (130a) for providing a time-varying radio antenna receive signal having a high-frequency carrier portion and a low-frequency modulation portion;
a selector (160a) for extracting the low-frequency modulation portion; and
an interface (164, 166) for outputting the selected low-frequency modulation portion.

23. A movable game device according to claim 22, further comprising:
a detector (122) for detecting a low-frequency frequency, which has been modulated onto the high-frequency radio signal, using the time-varying radio antenna receive signal,
wherein the interface (164, 166) is configured to transfer, instead of a time curve of the selected low-frequency modulation portion, information about a frequency underlying the low-frequency modulation portion.

24. A movable game device according to one of the claims 22 or 23, further comprising:
a transmitter for transmitting (150) information to an external transmitter, said information causing the external transmitter to radiate a radio transmit signal (152),
wherein the provider (120) comprises a receive antenna, and
wherein the transmitter is configured to use the receive antenna when transmitting the information.

25. A computer program having a program code for executing the method according to claim 21, when the program runs on a computer.

## Revendications

1. Dispositif pour mesurer une fréquence de rotation d'un accessoire de jeu mobile (3) à l'aide d'un signal radio haute fréquence, avec les caractéristiques suivantes :
un appareil (120) pour fournir un signal de réception d'antenne radio qui varie dans le temps ; et
un appareil (122) pour détecter une fréquence basse modulée vers le signal radio haute fréquence, à l'aide du signal de réception d'antenne radio qui varie dans le temps,
la fréquence basse du signal de réception d'antenne radio qui varie dans le temps représentant la fréquence de rotation de l'accessoire de jeu mobile.

2. Dispositif selon la revendication 1, dans lequel l'appareil (120) pour fournir un signal comporte une antenne radio qui est conçue pour une bande de fréquence utilisée par un signal de radiodiffusion ou un signal de télévision ou un signal de téléphonie mobile et qui a une caractéristique de rayonnement différente d'une source isotrope idéale, de sorte qu'une rotation de l'antenne radio fournit un signal porteur haute fréquence avec une part de modulation basse fréquence.

3. Dispositif selon la revendication 1 ou 2, dans lequel l'appareil (120) pour fournir un signal comporte un sélecteur (160a, 160b) pour sélectionner une part de modulation basse fréquence.

4. Dispositif selon la revendication 3, dans lequel l'appareil de détection (122) est conçu pour déterminer comme fréquence de rotation une fréquence du signal de modulation basse fréquence.

5. Dispositif selon l'une des revendications précédentes, dans lequel l'appareil de détection (122) comporte un détecteur de valeur extrême ou un détecteur de passage par zéro et un chronomètre pour définir une durée entre deux valeurs extrêmes ou entre une valeur extrême et un passage par zéro, et pour définir à partir de cette durée la fréquence de rotation.

6. Dispositif selon l'une des revendications précédentes, dans lequel l'appareil de détection (122) est conçu pour affaiblir une fréquence porteuse d'un champ électromagnétique haute fréquence, afin d'extraire une part de modulation basse fréquence.

7. Dispositif selon l'une des revendications précédentes, dans lequel l'appareil de détection (122) est conçu pour détecter une courbe enveloppante basse fréquence du signal de réception d'antenne radio.

8. Dispositif selon l'une des revendications précédentes, dans lequel le dispositif (120) pour fournir un signal est conçu pour fournir un signal de réception d'antenne radio avec deux canaux,
un premier canal représentant un signal radio d'une première antenne de réception (130a), et
un second canal représentant un signal de réception d'une seconde antenne de réception (130b) qui a une caractéristique d'antenne (132b) différence d'une caractéristique d'antenne (132a) de la première antenne (130a).

9. Dispositif selon la revendication 8, dans lequel la première antenne radio a une première caractéristique d'antenne avec une première direction (134a) de sensibilité maximale, et la seconde antenne radio a une seconde caractéristique d'antenne avec une seconde direction (134b) de sensibilité maximale,
la première direction et la seconde direction étant différentes.

10. Dispositif selon la revendication 9, dans lequel il y a entre les directions de sensibilité maximale une différence qui est située dans une zone angulaire entre 70° et 110°.

11. Dispositif selon l'une des revendications précédentes, dans lequel le dispositif (120) pour fournir un signal comporte une antenne dipôle ou une antenne à noyau de ferrite ou une antenne de téléphonie mobile.

12. Dispositif selon l'une des revendications précédentes, dans lequel l'appareil (120) pour fournir un signal est conçu pour une bande d'ondes longues, une bande d'ondes moyennes ou une bande d'ondes courtes.

13. Dispositif selon l'une des revendications précédentes, qui est relié mécaniquement à l'accessoire de jeu mobile (3) et qui comporte également une interface de sortie pour transmettre à un récepteur une information indiquant la fréquence de rotation.

14. Dispositif selon l'une des revendications précédentes, dans lequel l'appareil (120) pour fournir un signal est relié mécaniquement à l'accessoire de jeu mobile, et l'appareil de détection (122) est disposé loin de l'accessoire de jeu mobile,
l'accessoire de jeu mobile comportant une interface de sortie pour transmettre à l'appareil de détection (122) le signal de réception d'antenne radio qui varie dans le temps, et
l'appareil de détection (122) disposé à distance comportant une interface de réception pour recevoir un signal provenant de l'interface de sortie de l'accessoire de jeu mobile.

15. Dispositif selon l'une des revendications 1 à 11, qui est formé loin de l'accessoire de jeu mobile,
l'appareil (120) pour fournir un signal étant constitué par une interface d'entrée afin de recevoir un signal qui provient de l'accessoire de jeu mobile et qui contient des informations sur le signal de réception d'antenne radio qui varie dans le temps.

16. Dispositif selon l'une des revendications précédentes, qui présente en outre la caractéristique suivante :
un émetteur (150) pour envoyer une information à un émetteur externe, ladite information provoquant l'émission (152) d'un signal d'envoi radio par l'émetteur externe,
l'appareil (120) pour fournir un signal comportant une antenne de réception, et
l'émetteur étant conçu pour utiliser l'antenne de réception lors de l'émission des informations.

17. Dispositif selon l'une des revendications 8 à 10, dans lequel l'appareil de détection (122) est conçu pour recevoir le premier canal et le second canal et pour sélectionner le canal avec une plus grande amplitude basse fréquence dans une zone inférieure à 150 Hz.

18. Dispositif selon l'une des revendications 1 à 17 précédentes, dans lequel l'appareil (122) pour fournir un signal est conçu pour fournir un signal de réception d'antenne radio à large bande qui présente plusieurs porteuses haute fréquence à modulation basse fréquence,
et dans lequel l'appareil (122) pour fournir un signal est conçu pour sélectionner une composante basse fréquence qui apparaît conjointement dans plusieurs porteuses haute fréquence modulées.

19. Dispositif selon l'une des revendications précédentes, dans lequel l'appareil (122) pour fournir un signal est conçu pour fournir un signal de réception d'antenne radio haute fréquence ou un signal de réception d'antenne radio basse fréquence.

20. Dispositif selon l'une des revendications précédentes, dans lequel l'appareil (120) pour fournir un signal ou l'appareil d'extraction (122) est conçu pour extraire une part basse fréquence qui a une fréquence de moins de 100 Hz.

21. Procédé pour mesurer une fréquence de rotation d'un accessoire de jeu mobile (3) à l'aide d'un signal radio haute fréquence, avec les étapes suivantes :
fourniture (120) d'un signal de réception d'antenne radio qui varie dans le temps ; et
détection (122) d'une basse fréquence modulée vers le signal radio haute fréquence, à l'aide du signal de réception d'antenne radio qui varie dans le temps,
la basse fréquence du signal de réception d'antenne radio qui varie dans le temps représentant la fréquence de rotation de l'accessoire de jeu mobile.

22. Accessoire de jeu mobile (142) avec les caractéristiques suivantes :
une antenne radio (130a) pour fournir un signal de réception d'antenne radio qui varie dans le temps et qui présente une part porteuse haute fréquence et une part de modulation basse fréquence ;
un sélecteur (160a) pour extraire la part de modulation basse fréquence ; et
une interface (164, 166) pour sortir la part de modulation basse fréquence sélectionnée.

23. Accessoire de jeu mobile selon la revendication 22, qui présente en outre les caractéristiques suivantes :
un dispositif (122) pour détecter une fréquence basse modulée vers le signal radio haute fréquence, à l'aide du signal de réception d'antenne radio qui varie dans le temps,
l'interface (164, 166) étant conçue pour transmettre une information sur une fréquence sur laquelle est basée la part de modulation basse fréquence, au lieu d'une courbe dans le temps de la part de modulation basse fréquence sélectionnée.

24. Accessoire de jeu mobile selon la revendication 22 ou 23, qui présente en outre les caractéristiques suivantes :
un émetteur pour envoyer (150) une information à un émetteur externe, ladite information provoquant l'émission (152) d'un signal d'envoi radio par l'émetteur externe,
l'appareil (120) pour fournir un signal comportant une antenne de réception, et
l'émetteur étant conçu pour utiliser l'antenne de réception lors de l'émission des informations.

25. Programme informatique avec un code de programme pour la mise en oeuvre du procédé selon la revendication 21, si le programme est exécuté sur un ordinateur.
